(19) **Europäisches Patentamt / European Patent Office / Office européen des brevets**

(11) **EP 3 905 668 A1**

(12) **EUROPEAN PATENT APPLICATION**
published in accordance with Art. 153(4) EPC

(43) Date of publication:
**03.11.2021 Bulletin 2021/44**

(21) Application number: **19902409.2**

(22) Date of filing: **22.11.2019**

(51) Int Cl.:
**H04N 7/15** (2006.01)    **H04N 21/44** (2011.01)
**H04N 21/2743** (2011.01)

(86) International application number:
**PCT/CN2019/120230**

(87) International publication number:
**WO 2020/134761 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2018 CN 201811627807**

(71) Applicant: **ZTE Corporation**
**Shenzhen, Guangdong 518057 (CN)**

(72) Inventors:
• **TU, Yaofeng**
**Shenzhen, Guangdong 518057 (CN)**
• **ZHAO, Zhidong**
**Shenzhen, Guangdong 518057 (CN)**

• **ZHU, Hongjun**
**Shenzhen, Guangdong 518057 (CN)**
• **MEI, Junjun**
**Shenzhen, Guangdong 518057 (CN)**
• **HUANG, Zhenjiang**
**Shenzhen, Guangdong 518057 (CN)**
• **CHEN, Jun**
**Shenzhen, Guangdong 518057 (CN)**
• **GAO, Hong**
**Shenzhen, Guangdong 518057 (CN)**
• **ZHU, Jingsheng**
**Shenzhen, Guangdong 518057 (CN)**
• **ZHOU, Shijun**
**Shenzhen, Guangdong 518057 (CN)**

(74) Representative: **Canzler & Bergmeier**
**Patentanwälte**
**Partnerschaft mbB**
**Friedrich-Ebert-Straße 84**
**85055 Ingolstadt (DE)**

(54) **VIDEO CONFERENCE IMPLEMENTATION METHOD AND DEVICE, VIDEO CONFERENCE SYSTEM, AND STORAGE MEDIUM**

(57)    Disclosed are a video conference implementation method and device, a video conference system, and a storage medium. The video conference implementation method comprises: determining the type of terminal participating in a video conference; and when the terminal participating in the video conference comprises a single stream terminal, determining a video synthesis end, and sending the synthesized code stream generated by the video synthesis end to the single stream terminal, wherein the synthesized code stream is synthesized according to the original code stream of the terminal participating in the video conference.

FIG. 2

**Description**

**TECHNICAL FIELD**

Embodiments of the disclosure relate to, but are not limited to, the technical field of video conferences.

**BACKGROUND**

Multimedia communication has always been an object in the field of communications and constantly gets improved. The development of 4G/5G communication technologies and internet/mobile internet technologies bring about opportunities to commonly use of multimedia communication among clients. Multi-party video conferences are more and more widely applied to the fields of telecommunication, internet and mobile internet, and bring further and great convenience to people's work and life.

A multi-party video conference system includes two modes, i.e., a single-stream conference mode, and a multi-stream conference mode. The single-stream conference mode keeps the characteristic of one-to-one streams with individual single-stream terminals based on a single-stream server. The single-stream server receives audio/video code streams transmitted from the individual single-stream terminals, and synthesizes them into one path of audio/video stream by coding and decoding to transmit the one path of audio/video stream back to each single-stream terminal. A disadvantage of the single-stream conference mode is that video coding and decoding at the single-stream server side are expensive, and the synthesis cost is relatively high. As a result, the multi-stream conference mode emerges.

In the multi-stream conference mode, a multi-stream server is used as a media distribution unit for conference control and audio mixing. For video code streams, the multi-stream server adopts a forwarding manner, i.e., each multi-stream terminal sends a path of code stream, receives multiple paths of uplink code streams from other multi-stream terminals and forwarded by the multi-stream server, and finally decodes, synthesizes and displays the multiple paths of code streams. The multi-stream conference mode is a cheaper and extensible multi-party conference mode which has requirements on the terminals participating in the conference. In this mode, a single-stream terminal cannot participate in the multi-stream conference, mainly because the multi-stream conference mode requires that the terminal accessing the conference can support synthesized display of multiple paths of video code streams, while the single-stream terminal has no video synthesis capability and thus cannot access the multi-stream conference, leading to limited application scenarios of the multi-stream video conference.

**SUMMARY**

At least one embodiment of the present disclosure provides a video conference implementation method and apparatus, a video conference system and a computer-readable storage medium which enable access of a single-stream terminal.

At least one embodiment of the present disclosure provides a video conference implementation method, including: determining a type of a terminal participating in a video conference, determining, in response to that the terminal participating in the video conference includes a single-stream terminal, a video synthesis end, and sending a synthesized code stream generated by the video synthesis end to the single-stream terminal, the synthesized code stream is synthesized from an original code stream of the terminal participating in the video conference.

At least one embodiment of the present disclosure provides a video conference implementation method, including: receiving, by a multi-stream terminal, an original code stream sent from a media server, generating a synthesized code stream from the original code stream, and uploading the synthesized code stream to the media server so that the media server sends the synthesized code stream to a single-stream terminal.

At least one embodiment of the present disclosure provides a video conference implementation apparatus, including a memory and a processor, the memory having a program stored thereon which, when read and executed by the processor, causes the video conference implementation method according any of the above embodiments to be implemented.

At least one embodiment of the present disclosure provides a computer-readable storage medium having one or more programs stored thereon, the one or more programs being executable by one or more processors to cause the video conference implementation method according any of the above embodiments to be implemented.

The present disclosure further provides a video conference implementation system, including: a signaling processing module configured to process conference participation and exit of a terminal, and send information of the terminal participating in a conference to a media processing assembly; and the media processing assembly configured to determine a type of the terminal participating in the video conference according to the information of the terminal, and determine, in response to that the terminal participating in the video conference includes a single-stream terminal, a video synthesis end, and send a synthesized code stream generated by the video synthesis end to the single-stream terminal, the synthesized code stream is synthesized from an original code stream of the terminal participating in the video conference.

Other features and advantages of the disclosure will be set forth in the description which follows, and will become apparent from the description at least partially, or be understood by implementing the disclosure. Objects and other advantages of the disclosure may be realized and obtained by means of the structures particularly pointed out in the description, appended claims and drawings.

## BRIEF DESCRIPTION OF THE DRAWINGS

FIG. 1 is a schematic diagram illustrating networking of a convergence conference.

FIG. 2 is a flowchart (server side) illustrating a video conference implementation method provided in an embodiment of the present disclosure.

FIG. 3a is a schematic diagram illustrating a code stream delivered by a server side in an embodiment of the present disclosure.

FIG. 3b is a schematic diagram illustrating a synthesized code stream uploaded by a multi-stream terminal in an embodiment of the present disclosure.

FIG. 4 is a flowchart illustrating a video conference implementation method (multi-stream terminal side) provided in an embodiment of the present disclosure.

FIG. 5 is a block diagram of a video conference system provided in an embodiment of the present disclosure.

FIG. 6a is a flowchart illustrating implementation of a pure single-stream terminal video conference provided in an embodiment of the present disclosure.

FIG. 6b is a flowchart illustrating implementation of a pure single-stream terminal video conference provided in an application example of the present disclosure.

FIG. 6c is a schematic diagram illustrating networking of a pure single-stream terminal provided in an embodiment of the present disclosure.

FIG. 7a is a flowchart illustrating implementation of a forced single-stream terminal video conference provided in an embodiment of the present disclosure.

FIG. 7b is a flowchart illustrating implementation of a forced single-stream terminal video conference provided in an application example of the present disclosure.

FIG. 7c is a schematic diagram illustrating networking of a forced single-stream terminal provided in an embodiment of the present disclosure.

FIG. 8a is a schematic diagram illustrating a single-stream terminal and a multi-stream terminal holding a convergence video conference provided in an embodiment of the present disclosure.

FIG. 8b is a schematic diagram illustrating a single-stream terminal and a multi-stream terminal holding a convergence video conference provided in an application example of the present disclosure.

FIG. 8c is a schematic diagram illustrating networking of a single-stream terminal and a multi-stream terminal provided in an embodiment of the present disclosure.

FIG. 8d is a schematic diagram illustrating a downlink code stream received by a multi-stream terminal provided in an application example of the present disclosure.

FIG. 8e is a schematic diagram illustrating a code stream uploaded by a multi-stream terminal provided in an application example of the present disclosure.

FIG. 9a is a schematic diagram illustrating processing of a convergence video conference after a single-stream terminal exits the conference provided in an embodiment of the disclosure.

FIG. 9b is a schematic diagram illustrating processing of a convergence video conference after a single-stream terminal exits the conference provided in an application example of the disclosure.

FIG. 9c is a schematic diagram illustrating networking after a single-stream terminal exits the conference provided in an application example of the present disclosure.

FIG. 10a is a schematic diagram illustrating processing of a convergence video conference after a multi-stream terminal exits the conference provided in an embodiment of the disclosure.

FIG. 10b is a schematic diagram illustrating processing of a convergence video conference after a multi-stream terminal exits the conference provided in an application example of the disclosure.

FIG. 10c is a schematic diagram illustrating networking after a multi-stream terminal exits the conference provided in an application example of the present disclosure.

FIG. 11a is a schematic diagram illustrating processing of an outbound called idle multi-stream terminal provided in an embodiment of the present disclosure.

FIG. 11b is a schematic diagram illustrating processing of an outbound called idle multi-stream terminal provided in an application example of the present disclosure.

FIG. 11c is a schematic diagram illustrating a code stream received by an outbound called idle multi-stream terminal provided in an application example of the present disclosure.

FIG. 11d is a schematic diagram illustrating a code stream uploaded by an outbound called idle multi-stream terminal provided in an application example of the present disclosure.

FIG. 12 is a block diagram of a video conference implementation apparatus provided in an embodiment of the present disclosure.

FIG. 13 is a block diagram of a computer-readable storage medium provided in an embodiment of the present disclosure.

## DETAILED DESCRIPTION

For clarity and better understanding of the objects, technical solutions and advantages of the disclosure, embodiments of the present disclosure will be described in further detail with reference to the following detailed description and accompanying drawings. It will be appreciated that the specific embodiments described herein are merely for illustration of the disclosure and are not intended to limit the disclosure.

The steps illustrated in the flowchart of the drawings may be executed in a computer system such as a set of computer executable instructions. Also, although a logical order is shown in the flowchart, in some cases, the steps shown or described may be performed in a different order than that illustrated herein.

At present, there are many traditional video terminals in the market, which are single-stream terminals, and may cause great waste if unable to access a multi-stream video conference. From the perspective of protecting user's investment, it is necessary to support access of a single-stream terminal to a multi-stream video conference.

At least one embodiment of the present disclosure provides a video conference implementation method supporting access of both single-stream and multi-stream terminals, in which a terminal type is determined, and, when a single-stream terminal is present, the single-stream terminal is determined to be a video synthesis end, thereby enabling access of the single-stream terminal.

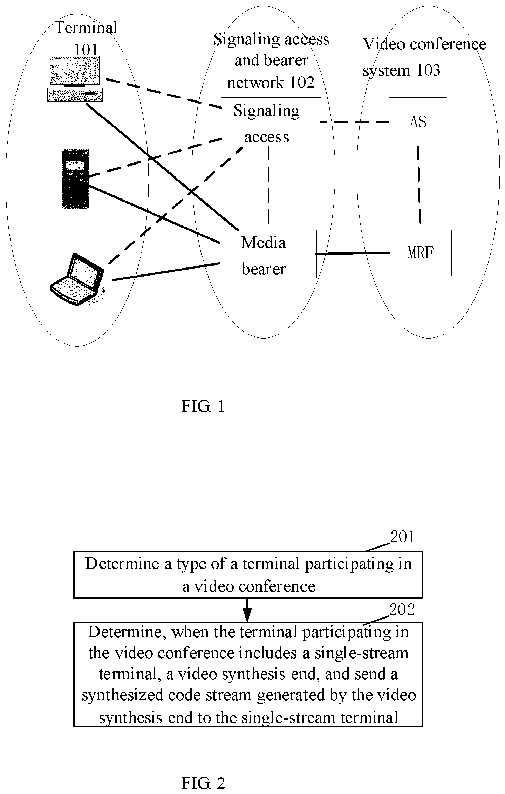

FIG. 1 is a schematic diagram illustrating networking of a convergence conference. As shown in FIG. 1, the networking of the convergence conference includes three parts: a first part is a terminal 101 including a single-stream terminal and a multi-stream terminal; a second part is a signaling access and bearer network 102 responsible for signaling access and media bearer of the multi-stream terminal and the single-stream terminal, the signaling access is responsible for signaling access processing of various terminals, such as a media gateway control function (MGCF), a soft switch (SS), a signaling interface unit (SIU), and the like; and the media bearer network is used for media access processing, such as media gateway (MGW); and a third part is a video conference system 103 including an application server (AS) and a media resource function (MRF), e.g., a media server. The solid lines in the figure represent media streams, and the dashed lines represent control signaling. The AS is configured to carry out signaling processing and service processing; and the MRF is configured to receive control signaling from the AS, and perform a corresponding media control processing function, including but not limited to conference participation, conference exit, a conference chairman, conference control, audio play, video play, an in-band/out-of-band receiving and transmitting function, an audio conference, a video conference, and the like.

FIG. 2 is a flowchart illustrating a video conference implementation method provided in an embodiment of the present disclosure. As shown in FIG. 2, the method includes the following steps 201 and 202.

At step 201, a type of a terminal participating in a video conference is determined.

At step 202, when the terminal participating in the video conference includes a single-stream terminal, a video synthesis end is determined, and a synthesized code stream generated by the video synthesis end is sent to the single-stream terminal. The synthesized code stream is synthesized from an original code stream of the terminal participating in the video conference.

In the present disclosure, the single-stream terminal refers to a terminal having no video synthesis capability, and the multi-stream terminal refers to a terminal having a video synthesis capability.

In the solution provided in this embodiment, when a single-stream terminal is present in the video conference, a video synthesis end is determined and performs video synthesis for the single-stream terminal, thereby realizing access of the single-stream terminal, and avoiding the waste caused by the fact that the existing single-stream terminal cannot access the video conference.

In some implementations, the video conference implementation method further includes: sending, when the terminal participating in the video conference includes a multi-stream terminal, an original code stream generated by another terminal participating in the video conference to the multi-stream terminal. For the multi-stream terminal, video synthesis is not needed, and thus an original code stream is directly sent and video synthesis is performed by the multi-stream terminal itself.

In some implementations, the step of determining the type of the terminal participating in the video conference includes: determining the type of the terminal participating in the video conference according to terminal information reported by the terminal. When accessing a video conference, the terminal needs to report terminal information thereof, from which a terminal type can be determined. For example, when the multi-stream terminal reports the terminal information, multiple pieces of video media description information are typically included (for example, multiple pieces of information beginning with "m = video" are carried); and when the single-stream terminal reports the terminal information, one piece of video media description information is typically included (for example, one piece of information beginning with "m = video" is carried). Therefore, the single-stream terminal and the multi-stream terminal can be distinguished according to the above information. Obviously, when reporting the terminal information, the single-stream terminal and the multi-stream terminal may also carry terminal type identifier information to indicate the terminal type.

As can be seen from the following example of multi-stream negotiation, audio/video capabilities are carried by the multi-stream terminal. The audio capability supports SILK, G711, and AMR-WB, and the video capability includes multiple pieces of video media description information ("m = video" lines in the following example), which indicates that the terminal is the multi-stream terminal. The video capability description includes description parameters such as a video port, video coding and decoding, a video resolution, a transmission port, a bandwidth, a transceiving mode, etc., which determine the support capability of the multi-stream terminal for various types of videos.

An example of multi-stream terminal negotiation signaling is shown below, in which only m = video lines are shown and the rest are omitted.

m=video 20594 RTP/AVP 118

…

m=video 20620 RTP/AVP 117

…

m=video 20646 RTP/AVP 117

…

m=video 20672 RTP/AVP 117

The single-stream terminal generally carries one piece of video media description information (the "m = video" line in the following example), and in this case, the terminal does not have any video synthesis capability, i.e., the terminal is a single-stream terminal. As can be seen from the following example of single-stream negotiation, audio/video capabilities are carried by the terminal, the audio capability supports G711, and the video capability description includes description parameters such as a video port, video coding and decoding, a video resolution, a transmission port, a bandwidth, a transceiving mode, etc., which determine the support capability of the single-stream terminal for various types of video formats.

An example of single-stream terminal negotiation signaling is shown below, in which only the m = video line is shown and the rest are omitted.

…

m=video 20020 RTP/AVP 106

…

In some implementations, the video synthesis end includes a media server and/or a multi-stream terminal. That is, either or both of the media server and the multi-stream terminal may be used as the video synthesis end. When the multi-stream terminal is used as the video synthesis end, the video synthesis capability of the multi-stream terminal can be sufficiently utilized, so that the computing power of the media server is effectively saved, the processing performance of the media server is improved, a convergence conference can be conveniently developed, and the single-stream terminal and the multi-stream terminal can be used simultaneously for a video conference.

In some implementations, when the multi-stream terminal is used as the video synthesis end, one or more multi-stream terminals may be used as the video synthesis end. The multiple multi-stream terminals may provide different formats of synthesized code streams, so as to satisfy the requirements of different single-stream terminals. For example, the single-stream terminals participating in the conference need to support multiple code stream formats, and in this case, different multi-stream terminals may be used to synthesize video code streams for different format requirements. Apparently, each of the multiple-stream terminals may provide multiple formats of synthesized code streams, and so on.

In addition, the multi-stream terminal serving as the video synthesis end may be a multi-stream terminal participating in the video conference, or may be an idle multi-stream terminal (at this time, the multi-stream terminal only serves as the video synthesis end, but does not upload the audio and video streams acquired by itself, and this idle multi-stream terminal is actively called by the server terminal of the video conference system).

In some implementations, the step of determining the video synthesis end includes: selecting one or more multi-stream terminals from a plurality of multi-stream terminals participating in the video conference as the video synthesis end. In selection of the video synthesis end, it may be selected from the terminals participating in the video conference according to a preset strategy. The preset strategy may include selecting the video synthesis end according to the computing power of the terminal. Obviously, this is merely an example, and other strategies may also be set.

In some implementations, the step of determining the video synthesis end includes: taking, after the idle multi-stream terminal is called to participate in the conference, the called multi-stream terminal as the video synthesis end. An idle multi-stream terminal configuration table may be configured in the video conference system so that a multi-stream terminal in the idle multi-stream terminal configuration table is called to participate in the conference. For example, in a case where only a single-stream terminal participates in the video conference, in order to reduce the pressure of a media server in the video conference system, an idle multi-stream terminal is called to participate in the conference and taken as the video synthesis end, so that the single-stream terminal can also perform the video conference. According to the solution provided in this embodiment, the processing capacity of the whole video conference system can be expanded, so that more terminals can access the video conference system.

For a video conference in which only a single-stream terminal participants, when a video synthesis resource is applied, the following two methods may be adopted for processing because no multi-stream terminal is selectable: one includes applying for resources synthesized by the media server itself, and carrying out video synthesis by the media server; the other includes inquiring an idle multi-stream terminal configuration table by a convergence conference processing module to initiate a conference participation call to an idle multi-stream terminal, setting, after the call is successful, the multi-stream terminal newly participating in the conference as the video synthesis end to provide video synthesis service for each single-stream terminal by the multi-stream terminal. Here, the idle multi-stream terminal configuration table includes the following information: a terminal number, a terminal IP, a terminal port (PORT), a terminal name, a transport protocol, a control protocol, whether switching virtual circuit (SVC) being supported, and the like. The outbound multi-stream terminal is only used as a capability end for video synthesis. Since videos acquired by the outbound multi-stream terminal do not participate in the synthesis, there is no need to upload the audio and video code streams acquired by the terminal itself, and no need to have interaction of the audio code streams; for details, see the following examples. An example of outbound negotiation is as follows.

```
v=0
o=ZTE-SOMTMS 4245362188 4245362189 IN IP4 192.168.1.118
s=session SDP
c=IN IP4 192.168.1.118
t=0 0
m=video 20594 RTP/AVP 118
b=AS:3584
a=rtpmap: 118 H264/90000
a=fmtp: 118
profile-level-id=64001f;packetization-mode=I; MaxBR=35840
a=recvonly
a=zimeclient
m=video 20620 RTP/AVP 117
b=AS:3584
a=rtpmap: 117 H264/90000
a=fmtp: 117
profile-level-id=42e01f;packetization-mode=I; MaxBR=35840
a=recvonly
a=zimeclient
m=video 20646 RTP/AVP 117
b=AS:3584
a=rtpmap: 117 H264/90000
a=fmtp: 117
profile-level-id=42e01f;packetization-mode=1; MaxBR=35840
a=recvonly
a=zimeclient
m=video 20672 RTP/AVP 117
b=AS:3584
a=rtpmap: 117 H264/90000
```

```
a=fmtp: 117
profile-level-id=42e01f;packetization-mode=1; MaxBR=35840
a=recvonly
m=video 20678 RTP/AVP 117
b=AS:3584
a=rtpmap: 117 H264/90000
a=fmtp:117
profile-level-id=42e01f;packetization-mode = 1; MaxBR=35840
a=sendonly
a=videoconfmixer
a=zimeclient
```

The italics represent added signaling lines, indicating that the idle multi-stream terminal serves as the video synthesis end and indicating a corresponding video synthesis format.

The outbound negotiation signaling contains four downlink code streams only received identified as "recvonly". The four, or obviously maybe more than four, downlink code streams received by the outbound multi-stream terminal are used for synthesis. Similarly, if more than one idle terminal is configured, more than one terminal may be called according to the actual situation. For a multi-stream terminal supporting SVC, the synthesized code stream may synchronously contain multiple formats of code streams. In this case, one multi-stream terminal supporting SVC code streams may be selected to satisfy various single-stream terminals with various video format requirements.

In some implementations, the media server of the video conference system may serve as the video synthesis end, i.e., either or both of the media server and the called idle multi-stream terminal are taken as the video synthesis end. One or more idle multi-stream terminals may be called to serve as the video synthesis end.

In addition, in other embodiments, the media server, the multi-stream terminal that has participated in the video conference (participating in the video conference itself and needing to upload its acquired audio and video streams) and the called idle multi-stream terminal (not participating in the video conference itself and not uploading its acquired audio and video streams) may all serve as the video synthesis end. That is, the video synthesis end may be one or more of a media server, a multi-stream terminal participating in a video conference, and an idle multi-stream terminal.

The selection of the video synthesis end may be triggered when a single-stream terminal participates in, or when all terminals have participated in the video conference, or when a multi-stream terminal serving as the video synthesis end exits the conference or has an exception. After selecting the video synthesis end, the media server generates a video synthesis end record table to record information of the video synthesis end, and record the single-stream terminal served by the video synthesis end, that is, the single-stream terminal to which the video synthesis end offers a code stream synthesis service. After the video synthesis end sends the generated synthesized code stream to the media server, the media server sends the synthesized code stream to the single-stream terminal. The single-stream terminal served by the video synthesis end is hereinafter referred to as a distribution terminal of the video synthesis end.

In some implementations, after determining the video synthesis end, the video conference implementation method further includes: sending, when the video synthesis end is a multi-stream terminal, to the multi-stream terminal indication information indicating that the multi-stream terminal is selected as the video synthesis end. The indication information may be transmitted to the multi-stream terminal through a renegotiation signaling. For example, a new line "a=videoconfmixer" is added in the renegotiation signaling to indicate that the multi-stream terminal is used as the video synthesis end. It should be noted that this is only an example, and other manners may be adopted to notify the multi-stream terminal that it is used as the video synthesis end.

In some implementations, after determining the type of the terminal participating in the video conference, the video conference implementation method further includes: determining synthesized video format information according to a preset rule. The synthesized video format information is used by the video synthesis end to generate the synthesized code stream.

The preset rule includes, but is not limited to: a Most satisfied principle, a Minimum satisfied principle, a priority satisfied principle and a multi-level distribution principle. Detailed description of various principles is as shown in table 1 below.

Table 1 Preset rule table

| Rule number | Rule name | Detailed description |
|---|---|---|
| 1 | Most satisfied principle | Select a format of the synthesized video that can satisfy the requirements of most single-stream terminals and ensure smooth playing of most single-stream terminals |

(continued)

| Rule number | Rule name | Detailed description |
|---|---|---|
| 2 | Minimum satisfied principle | Select, according to media negotiation, a video format of the terminal with the minimum video format requirement as a synthesized video format |
| 3 | Priority satisfied | Select a video format of the |
|  | principle | single-stream terminal having a priority as the synthesized video format |
| 4 | Multi-level distribution principle | Divide the single-stream terminals into multiple levels, and synthesize each level separately, i.e., select a plurality of synthesized video formats, each corresponding to a level. |

In some implementations, after determining the video synthesis end, the video conference implementation method further includes: sending a first instruction carrying the synthesized video format information to the video synthesis end.

In some implementations, the synthesized video format information includes at least one of: a transmission port for the synthesized video, a coding or decoding type of the synthesized video, a bandwidth, a transceiving mode, a resolution of the synthesized video, a code rate of the synthesized video and a frame rate of the synthesized video.

A code stream interaction process between a terminal and a media server is explained below. Provided between the terminal and the media server are uplink audio and video code streams, and downlink audio and video code streams. In the related art, the downlink code stream received by the multi-stream terminal is an original code stream from other terminals that needs to be synthesized, and the uplink video code stream is an original code stream acquired by the multi-stream terminal itself. In the embodiment of the present disclosure, if a multi-stream terminal is selected as the video synthesis end, the received downlink code stream is still an original code stream from other terminals that needs to be synthesized, but the uplink code stream, in addition to its own original code stream, further includes the synthesized code stream. At this time, the synthesized code stream uploaded by the multi-stream terminal will be forwarded to a single-stream terminal and displayed to a user through the single-stream terminal.

The downlink code stream delivered by the media server is a single picture of other terminals, the uplink code stream sent from the terminal includes a picture of the terminal itself on one path, and synthesized pictures of different resolutions, code rates and frame rates on other paths.

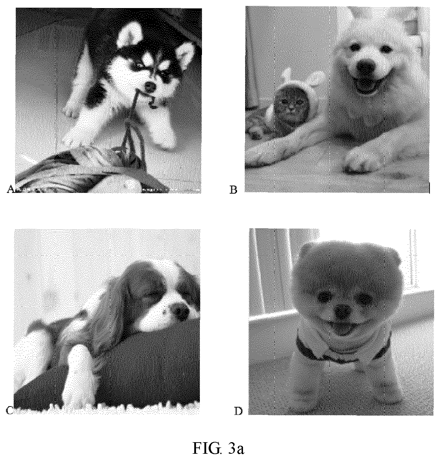

FIG. 3a shows the four paths of code stream images forwarded to the terminal from the media server, in which the delivered code streams are all single-picture images coming from uplink original code streams of other terminals.

The port correspondence of the code stream display image delivered from the media server is shown in table 2 below.

Table 2 Correspondence table

| Source IP + PORT | Destination IP + PORT | Description of code stream |
|---|---|---|
| 58.240.115.51:23080 | 192.168.1.121:31982 | Code stream of terminal A forwarded by the media server |
| 58.240.115.51:23082 | 192.168.1.121:31984 | Code stream of terminal B forwarded by the media server |
| 58.240.115.51:23084 | 192.168.1.121:31986 | Code stream of terminal C |
|  |  | forwarded by the media server |
| 58.240.115.51:23088 | 192.168.1.121:31988 | Code stream of terminal D forwarded by the media server |

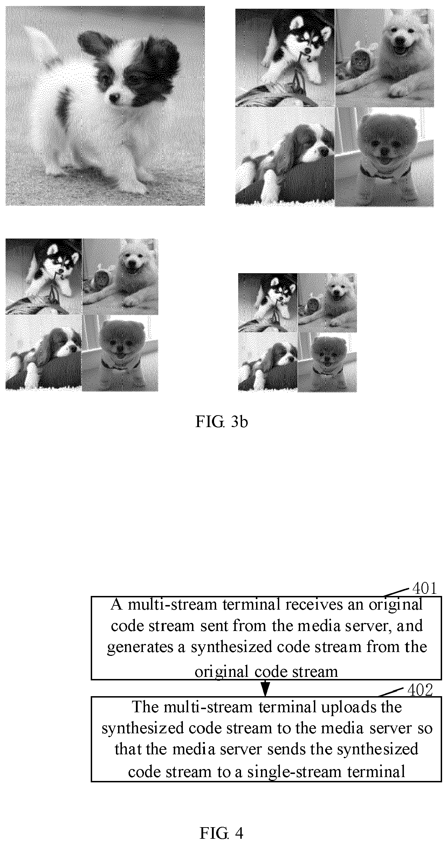

The four paths of uplink code stream of the terminal are as shown in FIG. 3b. it can be seen that one path of the code stream of the terminal is an image of the terminal itself, while the other three paths are synthesized images. The synthesis is performed in a four-split screen manner as shown in FIG. 3b. There may be various manners of image synthesis, but only one path of code stream is demonstrated. The three paths of synthesized images have different resolutions, code rates and frame rates, which are needed for a terminal media processing module to conveniently forward a code stream of a proper size to a proper terminal. In addition, the number of uplink code streams of the terminal is changeable and may be selected according to the strategy; three paths of code streams, or one or two paths of code streams or more synthesized code streams may be used. If the terminal supports SVC, one path of uplink stream of the terminal may include SVC video code streams of various resolutions, code rates and frame rates, and the media server extracts and forwards the SVC code streams of multiple video formats as required. In some implementations, according to the principle of terminal capability optimization, the multi-stream terminal may uplink a single-path synthesized code stream.

The port correspondence of the code stream display image uploaded by the terminal is shown in table 3 below.

Table 3 Correspondence table

| Source IP + PORT | Destination IP + PORT | Description of code stream |
|---|---|---|
| 192.168.1.121:31982 | 58.240.115.51:23080 | Uplink original code stream of the terminal itself |
| 192.168.1.121:31992 | 58.240.115.51:23090 | Terminal uplink synthesized code stream 1: 1080P/10/1M |
| 192.168.1.121:31996 | 58.240.115.51:23094 | Terminal uplink synthesized code stream 2: 720P/10/512K |
| 192.168.1.121:31998 | 58.240.115.51:23098 | Terminal uplink synthesized code stream 3: 480P/10/384K |

In some implementations, the video conference implementation method further includes: recording, when the video synthesis end is a multi-stream terminal, single-stream terminals served by the video synthesis end; and sending, when all single-stream terminals served by the multi-stream terminal as the video synthesis end exit the conference, to the multi-stream terminal a second instruction indicating that the multi-stream terminal no longer serves as the video synthesis end. The second instruction may be implemented by setting the synthesis port to 0 through renegotiation. It should be noted that this is only an example, and the multi-stream terminal may be notified that it no longer serves as the video synthesis end in other manners.

In some implementations, during determination of the video synthesis end, a plurality of video synthesis ends are determined and serve as backups for each other. When one of the video synthesis ends exits the conference or has an exception, a switch to another video synthesis end is performed so that self-adaptive switching of the video synthesis ends is implemented without being perceived obviously by the user, and the video quality and effect of the convergence conference is effectively ensured. For example, at least two paths of video synthesis ends are selected, and both the multi-stream terminal and the media server are used as the video synthesis ends, which have no actual difference in the video synthesizing effect and can serve as a backup to each other. When the multi-stream terminal exits due to an exception, the media server can also synthesize the synthesized code stream required by the single-stream terminal, so as to satisfy requirements of the convergence video conference. Apparently, in some implementations, if another multi-stream terminal exists, the multi-stream terminal is preferably selected as the video synthesis end, which may save the processing capability of the media server and improve the overall service performance of the system.

In some implementations, the video conference implementation method further includes: re-determining the video synthesis end when the multi-stream terminal serving as the video synthesis end exits the conference or has an exception. For example, the exception of the multi-stream termination includes: a multi-stream terminal that has been selected as the video synthesis end unable to continue providing a video synthesis service due to congestion caused by a change in network conditions. In this embodiment, when the video synthesis end exits the conference or has an exception, it is dynamically switched to another video synthesis end so that adverse effects are effectively reduced, the video conference service is not stopped due to exit of the multi-stream terminal (video synthesis end), and continuity of system functions is ensured.

In some implementations, the step of re-determining the video synthesis end includes: taking a backup video synthesis end as a new video synthesis end, or selecting the video synthesis end from the multi-stream terminals which participate in the video conference but are not selected as the video synthesis end, or calling an idle multi-stream terminal as the video synthesis end. That is, in selection of the video synthesis end, a backup video synthesis end may be set and serve as the video synthesis end to perform code stream synthesis when a current video synthesis end exits the conference or has an exception.

In some implementations, the step of determining the video synthesis end includes: taking, when the configured conference is in a preset mode, a media server as the video synthesis end. For example, if the preset mode is a forced single-stream mode, that is, a video conference is held in a single-stream conference mode, then the media server is selected as the video synthesis end.

The video conference implementation method further includes: sending, when the terminals participating in the video conference include a multi-stream terminal, a synthesized code stream generated by the media server to the multi-stream terminal. That is, in the forced single-stream mode, a multi-stream terminal is also regarded as a single-stream terminal.

As shown in FIG. 4, another embodiment of the present disclosure provides a video conference implementation method comprising steps 401 and 402.

At step 401, a multi-stream terminal receives an original code stream, and generates a synthesized code stream from the original code stream.

At step 402, the multi-stream terminal uploads the synthesized code stream to the media server so that the media server sends the synthesized code stream to a single-stream terminal.

According to the solution provided in this embodiment, the multi-stream terminal serves as the video synthesis end and uploads the synthesized code stream to the media server, thereby providing support for the single-stream terminal to participate in a multi-stream conference.

In some implementations, in step 401, before the multi-stream terminal receives the original code stream, the method further includes: receiving, by the multi-stream terminal, a conference participation request and participating in the video conference. Namely, an idle multi-stream terminal participates in the video reference in response to a conference participation request, and serves as the video synthesis end for code stream synthesis.

In some implementations, in step 401, the step of generating the synthesized code stream from the original code stream includes: generating, after receiving a first instruction indicating that a current device (i.e., the multi-stream terminal) is selected as the video synthesis end, the synthesized code stream from the original code stream. After selecting the multi-stream terminal as the video synthesis end, the media server sends an instruction to notify that the multi-stream terminal is selected as the video synthesis end.

In some implementations, the first instruction carries video synthesis information, and the step of generating the synthesized code stream includes: generating the synthesized code stream according to the video synthesis information in the first instruction.

In some implementations, the first instruction includes at least one of: a transmission port for the synthesized video, a coding or decoding type of the synthesized video, a bandwidth, a transceiving mode, a resolution of the synthesized video, a code rate of the synthesized video and a frame rate of the synthesized video.

In some implementations, the video conference implementation method further includes: stopping, by the multi-stream terminal, generation of the synthesized code stream upon receiving a second instruction indicating that the multi-stream terminal no longer serves as the video synthesis end, and releasing related resources, i.e., releasing corresponding resources used for generating and uploading the synthesized code stream.

In some implementations, the synthesized code stream is a single-path or multi-path synthesized code stream, and the single-path synthesized code stream includes one or more video formats of code streams. The single-path synthesized code stream may be a code stream of only one resolution, or may be a scalable video coding (SVC) code stream of multiple resolutions. The multi-path synthesized code stream may be a code stream of multiple formats (each path has one format), where the format include a resolution, a frame rate, a code rate, and the like. The code stream of multiple formats may be video code streams of different formats with multiple video resolutions, multiple frame rates and multiple code rates, so as to satisfy the requirements on the supported video formats of different single-stream terminals.

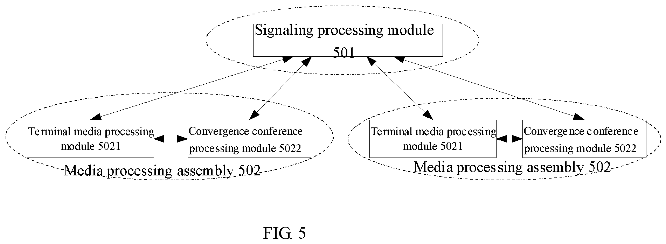

FIG. 5 is a schematic architecture diagram of a video conference implementing system. As shown in FIG. 5, the video conference implementing system includes a signaling processing module 501 and a media processing assembly 502. There may be multiple sets of media processing assemblies 502 deployed in a distributed manner. The signaling processing module 501 may be deployed partially on the AS and partially on the MRF, and the media processing assembly 502 may be deployed on the MRF. Apparently, other deployment modes may also be adopted. The signaling processing module 501 is configured to process conference participation and exit of a terminal, and to send information of a terminal participating in a conference to the media processing assembly 502. The signaling processing module 501 is a control interface module interacting with an external application, and is responsible for parsing a control signaling, extracting terminal information from the control signaling to convert it into an internal instruction, sending the internal instruction to the media processing assembly 502 (for example, to the terminal media processing module 5021), and converting an internal request or response into a control signaling to send it to the external application. The signaling processing module 501 is responsible for processing conference participation and exit of a terminal (including a single-stream terminal and a multi-stream terminal), including terminal capability negotiation processing, conference participation processing, and conference exit processing. Meanwhile, information of the terminal participating in the conference is sent to the media processing assembly 502 via the internal instruction so that the media processing assembly 502 can identify, record and perform subsequent processing on various terminals participated in the conference. The terminal information includes, but is not limited to, information of a terminal type and/or a terminal capability. The information of the terminal capability includes, but is not limited to, for example, at least one of: an audio capability, a video resolution, a video frame rate, a video code rate, a transmission port, a bandwidth, and the like.

The media processing assembly 502 is configured to, determine a type of the terminal participating in the video conference according to the information of the terminal, determine, when the terminal participating in the video conference includes a single-stream terminal, a video synthesis end, and send a synthesized code stream generated by the video synthesis end to the single-stream terminal. The synthesized code stream is synthesized from an original code stream of the terminal participating in the video conference.

In some implementations, the media processing assembly 502 includes a terminal media processing module 5021 and a convergence conference processing module 5022. The terminal media processing module 5021 is configured to receive the information of the terminal participating in the conference sent from the signaling processing module 501, send the information of the terminal to the convergence conference processing module 5022, and receive an original code stream, receive information of the video synthesis end sent from the convergence conference processing module 5022, and send, based on the information of the video synthesis end, the synthesized code stream generated by the video synthesis end to the single-stream terminal. The terminal media processing module 5021 further performs various audio processing functions and video processing functions. The audio processing function includes functions like audio playing, audio recording, audio conference and audio conference control. The video processing function includes functions like video playing, video recording, video conference and video conference control. In a multi-stream video conference, the video conference function means receiving a code stream from each terminal, and forwarding the code stream of each terminal to other terminals. The received code stream includes two types: one is a video original code stream acquired by the terminal, which is generally a code stream of a single image to be forwarded to other multi-stream terminals, where all the received original code streams are coded and synthesized by the multi-stream terminal so as to be displayed to a user, the other is a synthesized code stream, which is a code stream synthesized by a multi-stream terminal and forwarded to a single-stream terminal, where the synthesized code stream is directly displayed to a user by the single-stream terminal.

The convergence conference processing module 5022 is responsible for processing of a convergence conference, including forced single-stream conference processing, video synthesis end selection, multi-stream self-adaptation, and conference outbound calling of a multi-stream terminal. The forced single-stream conference processing determines a form that a multi-party video conference is performed. The convergence conference processing module 5022 determines whether the conference is configured as a forced single-stream conference. If so, the multi-stream terminal in the video conference is no longer regarded as the video synthesis end but an ordinary single-stream terminal, and meanwhile, the multi-stream terminal will not be selected as the video synthesis end. In some implementations, the convergence conference processing module 5022 determines a type of the terminal participating in the video conference according to the information of the terminal, determines, when the terminal participating in the video conference includes a single-stream terminal, a video synthesis end, and notifies the terminal media processing module 5021 of the information of the video synthesis end.

In some implementations, the convergence conference processing module 5022 determining the video synthesis end includes: taking a media server and/or a multi-stream terminal as the video synthesis end.

In some implementations, the convergence conference processing module 5022 determining the video synthesis end includes: selecting one or more multi-stream terminals from a plurality of multi-stream terminals participating in the video conference as the video synthesis end.

In some implementations, the convergence conference processing module 5022 determining the video synthesis end includes: calling an idle multi-stream terminal to participate in the conference, and taking, after the called multi-stream terminal participates in the conference, the called multi-stream terminal as the video synthesis end.

In some implementations, the convergence conference processing module 5022 is further configured to, after determining the video synthesis end, send, when the video synthesis end is a multi-stream terminal, to the terminal media processing module 5021 indication information indicating that the multi-stream terminal is selected as the video synthesis end.

The terminal media processing module 5021 is further configured to send to the corresponding multi-stream terminal the indication information indicating that the multi-stream terminal is selected as the video synthesis end.

The video synthesis end selection function is implemented by determining the terminal type, and the convergence conference processing module 5022 identifies the multi-stream terminal. The convergence conference processing module 5022 selects a terminal with a video synthesis capability (i.e., a multi-stream terminal) to perform video synthesis. After the convergence conference processing module 5022 selects a multi-stream terminal as the video synthesis end, a first instruction, including video synthesis end indication information (i.e., information for indicating that the multi-stream terminal is selected as the video synthesis end) and/or video synthesis information, is sent from the terminal media processing module 5021 to notify the video synthesis end. The video synthesis information includes, but is not limited to: a video port, video coding and decoding, a video resolution, a video frame rate, a video code rate, a transmission port, a bandwidth, a transceiving mode and the like. The video synthesis end indication information may be implemented by adding description information into the media description information, and the video synthesis information may be implemented by adding description information into the media description information. The first instruction may be transmitted to the multi-stream terminal through renegotiation. In some implementations, one or more pieces of video media description line information, such as a media description line, may be added into the renegotiation signaling to be dedicatedly used as a media code stream channel of the synthesized video. Here, multiple lines of video media description may be used for multiple video formats of synthesized videos. For example, the video format information described by the newly added "m=video" line is used for generating an uplink synthesized code stream, and the newly added "a=videoconfmixer" line is used for indicating that the multi-stream terminal is used as the video synthesis end.

As shown in the renegotiation signaling below, the following information, namely the newly added "m=video" line, is added into the renegotiation signaling, the synthesized video is uplinked to the server side via a port 20678, and the format of the synthesized video satisfies the description requirement of the newly added "m=video"; and the newly added "a=videoconfmixer" line is used for indicating that the multi-stream terminal is used as the video synthesis end.

The information added into the renegotiation signaling is as follows.

```
m=video 20678 RTP/AVP 117
b=AS:3584
a=rtpmap: 117 H264/90000
a=fmtp:117
profile-level-id=42e01f;packetization-mode=1; MaxBR=35840
a=sendonly
a=videoconfmixer
a=zimeclient
```

In some implementations, the convergence conference processing module 5022 is further configured to, record, when the video synthesis end is a multi-stream terminal, single-stream terminals served by the video synthesis end; and send, when all single-stream terminals served by the multi-stream terminal as the video synthesis end exit the conference, to the terminal media processing module 5021 a second instruction indicating that the multi-stream terminal no longer serves as the video synthesis end.

The terminal media processing module 5021 is further configured to send to the multi-stream terminal a second instruction indicating that the multi-stream terminal no longer serves as the video synthesis end.

In some implementations, the convergence conference processing module 5022 is further configured to re-determine the video synthesis end when the multi-stream terminal serving as the video synthesis end exits the conference or has an exception. Re-determining the video synthesis end may include: taking a backup video synthesis end as the video synthesis end (in such case, the single-stream terminals served by the multi-stream terminal that exits the conference or has an exception are added to a distribution terminal list of the backup video synthesis end), or selecting a new multi-stream terminal as the video synthesis end, or calling an idle multi-stream terminal as the video synthesis end.

Scenario I: Holding a convergence video conference by pure single-stream terminals

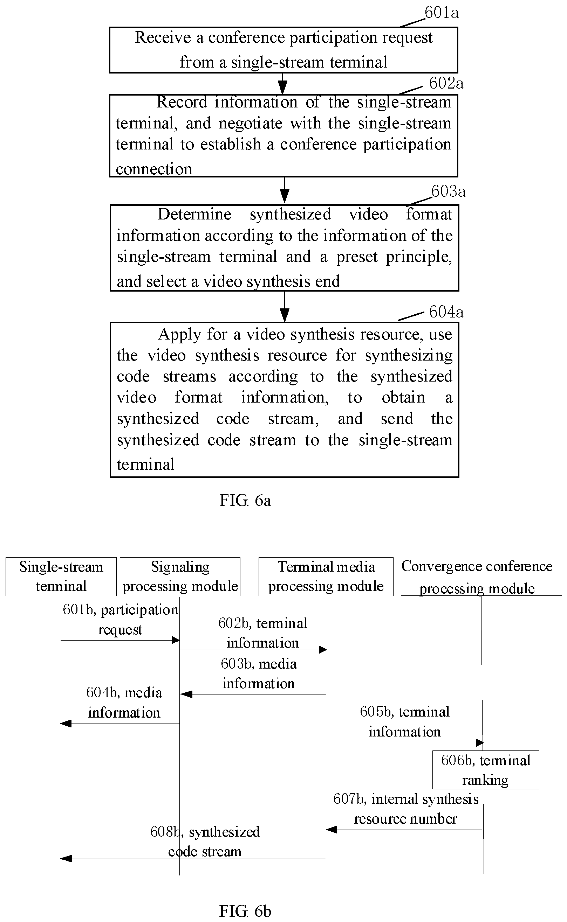

As shown in FIG. 6a, in Scenario I, the video conference implementation method in the embodiment of the disclosure includes steps 601a to 604a.

At step 601a, a conference participation request is received from a single-stream terminal.

At step 602a, information of the single-stream terminal is recorded, and negotiation is performed with the single-stream terminal to establish a conference participation connection.

At step 603a, synthesized video format information is determined according to the information of the single-stream terminal and a preset principle, and a video synthesis end is selected. In this embodiment, the media server is selected as the video synthesis end, but it should be noted that in other embodiments, an idle multi-stream terminal may be called as the video synthesis end, or both the media server and the called idle multi-stream terminal may be selected as video synthesis ends.

At step 604a, an application for a video synthesis resource is submitted, the video synthesis resource is used for synthesizing code streams according to the synthesized video format information, and a synthesized code stream is sent to the single-stream terminal.

This is illustrated below by a specific application example.

As shown in FIG. 6b, the video conference implementation method includes steps 601b to 608b.

At step 601b, a single-stream terminal initiates a conference participation request to a signaling processing module.

At step 602b, the signaling processing module processes the conference participation request, and sends the information of the single-stream terminal to a terminal media processing module. The information of the single-stream terminal includes, but is not limited to, at least one of: a terminal type, an audio port, an audio format, a video port, a video resolution, a video frame rate, a video code rate, a transmission port, or a bandwidth.

At step 603b, the terminal media processing module records information of the single-stream terminal, and feeds back the negotiated media information to the signaling processing module.

At step 604b, the signaling processing module completes handshake negotiation with the single-stream terminal, and a conference participation connection for the single-stream terminal is established.

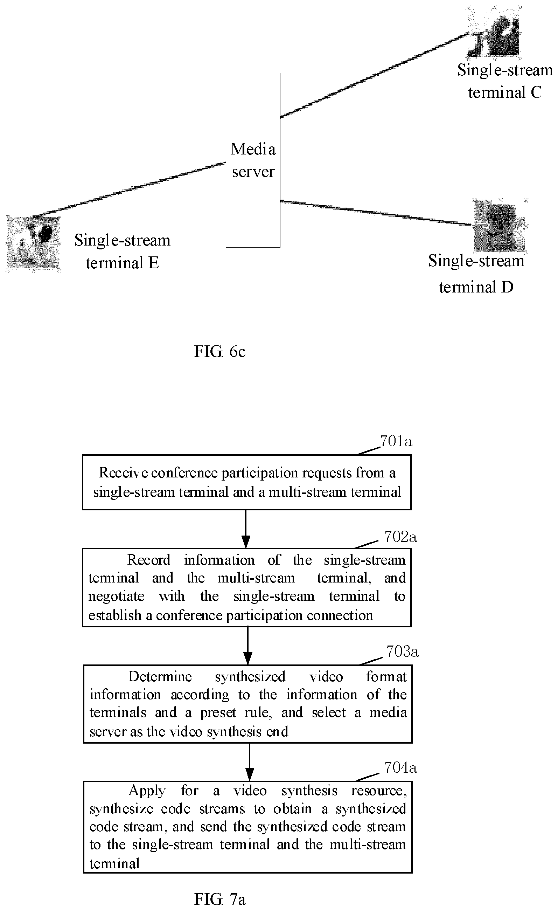

As shown in FIG. 6c, the networking includes a single-stream terminal C, a single-stream terminal D, and a single-stream terminal E. All terminals in networking are single-stream terminals.

At step 605b, the terminal media processing module sends the information of the single-stream terminal to a convergence conference processing module.

At step 606b, the convergence conference processing module obtains the terminal information from the terminal media processing module, judges all the terminals to find that the terminals participating in the video conference are single-stream terminals, and ranks the single-stream terminals according to the single-stream negotiation media information. The ranking is used for format selection of the synthesized video. The ranking may be performed according to the video resolution, frame rate and code rate.

It should be noted that the ranking is not necessary.

A ranking table of the single-stream terminals is shown in table 4, including the terminal number, the terminal type, the audio/video port, the video resolution, the video frame rate, the video code rate, and the like.

Table 4 Terminal ranking table

| Terminal number | Terminal type | Audio/ Video port | Video resolution, frame rate and code rate | .... |
|---|---|---|---|---|
| 1 (in this example, corresponding to the shown terminal C) | Single-stream | 20100, 20102 | 720P/10/512K | |
| 2 (in this example, corresponding to the shown terminal D) | Single-stream | 20104, 20106 | 480P/10/384K | |
| 3 (in this example, corresponding to the shown terminal E) | Single-stream | 20108, 20110 | 480P/10/384K | |

At step 607b, the convergence conference processing module selects a synthesized video format according to a preset rule, applies for a video synthesis resource according to the selected synthesized video format, and sends an internal synthesis resource number to the terminal media processing module.

The internal synthesis resource number refers to index information of the resource.

This embodiment is for a pure single-stream conference, in which the convergence conference processing module selects the media server as the video synthesis end, and notifies the terminal media processing module of the internal synthesis resource number of the video synthesis end.

At step 608b, the terminal media processing module uses the internal synthesis resource number to synthesize original code streams to obtain a synthesized code stream and forward the synthesized code stream to each single-stream terminal.

The original code stream is sent from the terminal (in this embodiment, a single-stream terminal) to the terminal media processing module.

According to the solution provided in this embodiment, when only single-stream terminals participate in the video conference, the media server is selected as the video synthesis end, thereby realizing access of the single-stream terminals.

Scenario II Holding a convergence video conference by forced single-stream terminals

As shown in FIG. 7a, in Scenario II, the video conference implementation method in the embodiment of the disclosure includes steps 701a to 704a.

At step 701a, conference participation requests are received from a single-stream terminal and a multi-stream terminal.

The conference participation requests of the single-stream terminal and the multi-stream terminal may be initiated simultaneously or separately.

At step 702a, information of the single-stream terminal and the multi-stream terminal is recorded, and negotiation is performed with the single-stream terminal to establish a conference participation connection.

In this embodiment, the preset mode is a forced single-stream conference mode, that is, the media server is used as the video synthesis end regardless of the type of the connected terminal.

At step 703a, synthesized video format information is determined according to the information of the terminals and a preset rule, and each server is selected as a video synthesis end.

At step 704a, an application for a video synthesis resource is submitted, code streams are synthesized to obtain a synthesized code stream, and the synthesized code stream is sent to the single-stream terminal and the multi-stream terminal.

This is further illustrated by a specific example below.

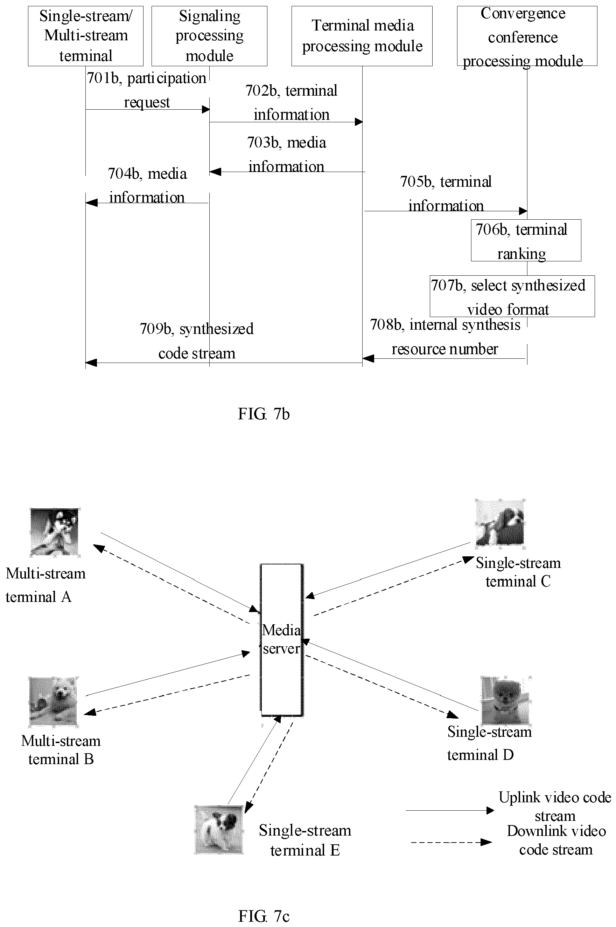

As shown in FIG. 7b, the video conference implementation method includes steps 701b to 709b.

At step 701b, a single-stream terminal and a multi-stream terminal respectively initiate a conference participation application to a signaling processing module.

At step 702b, the signaling processing module parses and processes conference participation control signaling, and inquires whether the conference is configured to be a forced single-stream conference. If so, the conference mode is set to be the forced single-stream mode when the information of the terminals is sent to the terminal media processing module. The information of the terminals includes, but is not limited to, for example, at least one of: a terminal type, an audio port, an audio format, a video port, a video resolution, a video frame rate, a video code rate, a transmission port, a bandwidth, and the like.

As shown in FIG. 7c, there are two multi-stream terminals (the multi-stream terminal A and multi-stream terminal B) and three single-stream terminals (single-stream terminal C, single-stream terminal D, and single-stream terminal E) participating in the conference. When each terminal participates in the conference, the information of the terminal is distributed to the terminal media processing module through an internal message.

At step 703b, the terminal media processing module records information of the single-stream terminal and the multi-stream terminal, and judges whether the conference is in the forced single-stream mode. If so, the media information negotiated by the multi-stream terminal is fed back to the signaling processing module according to the format of the single-stream terminal.

At step 704b, the signaling processing module completes handshake negotiation with the terminals, and a conference participation connection for the terminals is established.

When all terminals are in the conference, a terminal information table is as shown in table 5 below (the information in table 5 is merely an example and does not intend to be limitation. For example, the transmission port and the bandwidth are also necessary, but are omitted here due to the space). It should be noted that the terminal numbers in table 5 are index information of the terminals.

Table 5 Terminal information table

| Terminal number | Terminal type | Audio/Video port | Video resolution, frame rate and code rate | .... |
|---|---|---|---|---|
| (i.e., multi-stream terminal A) | Multi-strea m | 20080, 20082 | 720P/15/1M | |
| (i.e., multi-stream terminal B) | Multi-strea m | 20090, 20092 | 720P/15/1M | |
| (i.e., single-stream terminal C) | Single-strea m | 20100, 20102 | 720P/10/512K | |
| (i.e., single-stream terminal D) | Single-strea m | 20104, 20106 | 480P/10/384K | |
| (i.e., single-stream terminal E) | Single-strea m | 20108, 20110 | 480P/10/384K | |

In this case, as shown in FIG. 7c, the single-stream and multi-stream terminals hold the convergence conference, and the multi-stream terminal is forced to be regarded as a single-stream terminal: uplink one path of audio code stream and one path of video code stream, while receiving a downlink synthesized code stream and a downlink audio code stream delivered from the media server.

At step 705b, the terminal media processing module sends the information of the terminals to a convergence conference processing module.

At step 706b, the convergence conference processing module obtains the terminal information from the terminal media processing module, and judges whether the conference is in the forced single-stream mode. If so, the single-stream and multi-stream terminals are ranked at the same time, and the ranking is used for selection of the video synthesized format. A ranking table in this example is shown in table 6 below.

Table 6 Terminal ranking table

| Ranking number | Video resolution, frame rate and code rate | Terminal number | .... |
|---|---|---|---|
| 1 | 720P/15/1M | 1,2 | |
| 2 | 720P/10/512K | 3 | |
| 3 | 480P/10/384K | 4, 5 | |

At step 707b, the convergence conference processing module selects a synthesized video format according to a preset rule. The preset rule includes, but is not limited to: a Most satisfied principle, a Minimum satisfied principle, a priority satisfied principle and a multi-level distribution principle. Detailed description of various principles is as shown in table 1.

At step 708b, the convergence conference processing module applies for a video synthesis resource according to the synthesized video format, and in a forced single-stream mode here, selects the media server as the video synthesis end, and sends an internal synthesis resource number to the terminal media processing module.

At step 709b, the terminal media processing module performs video synthesis according to the internal synthesis resource number, and acquires and forwards the synthesized code stream to each terminal (including the single-stream terminal and the multi-stream terminal).

In this embodiment, by setting the conference mode to be the forced single-stream mode to be compatible with the existing single-stream mode conference, access of the single-stream terminal is also implemented.

Scenario III Holding a convergence video conference by single-stream/multi-stream terminals

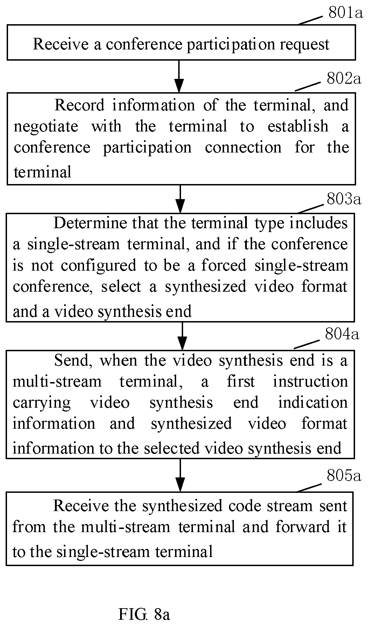

As shown in FIG. 8a, in Scenario III, the video conference implementation method in the embodiment of the disclosure includes steps 801a to 805a.

At step 801a, a conference participation request is received.

At step 802a, terminal information is recorded, and negotiation is performed with the terminal to establish a conference participation connection for the terminal. The terminal information includes information of a terminal capability.

At step 803a, it is determined that the terminal type includes a single-stream terminal, and if the conference is not configured to be a forced single-stream conference, a synthesized video format and a video synthesis end are selected.

The synthesized video format is selected according to a preset rule.

The video synthesis end is selected according to a preset strategy. For example, the most powerful terminal is selected as the video synthesis end, and the like.

The selected video synthesis end and a distribution terminal thereof are recorded. In selection of the video synthesis end, at least one of the operations is performed: selecting one or more multi-stream terminals as the video synthesis end, selecting a media server as the video synthesis end; calling one or more idle multi-stream terminals as the video synthesis end.

In this embodiment, a multi-stream terminal is selected as the video synthesis end.

At step 804a, when the video synthesis end is a multi-stream terminal, a first instruction carrying video synthesis end indication information and synthesized video format information is sent to the selected video synthesis end.

At step 805a, the synthesized code stream sent from the multi-stream terminal is received and forwarded to the single-stream terminal.

It should be noted that the code stream interaction in the video conference includes that: the single-stream terminal sends an original code stream to the media server, and the media server delivers the synthesized code stream (from the video synthesis end) to the single-stream terminal. A multi-stream terminal which is not selected as the video synthesis end sends an original code stream to the server, receives original code streams of other terminals forwarded by the media server, and synthesizes the original code streams to display locally. The multi-stream terminal (participating in the video conference) selected as the video synthesis end sends an original code stream to the server, receives original code streams of other terminals forwarded by the media server, synthesizes the original code streams to display locally, synthesizes the original code streams to obtain a synthesized code stream, and uploads the synthesized code stream to the media server. The synthesized code stream locally displayed and the synthesized code stream uploaded may be different, and which original code streams are synthesized, the layout of the synthesized pattern and the like may be controlled by the media server. The multi-stream terminal (an idle multi-stream terminal which does not participate in the video conference) selected as the video synthesis end receives original code streams of other terminals forwarded by the media server, synthesizes the original code streams to obtain a synthesized code stream, and uploads the synthesized code stream to the media server. Which original code streams are synthesized, the layout of the synthesized image and the like may be controlled by the media server.

According to the solution provided in this embodiment, when a single-stream terminal participates in the video conference, a video synthesis end is determined and performs code stream synthesis for the single-stream terminal, thereby enabling participation of the single-stream terminal in the video conference, and avoiding waste of the invested single-stream terminal.

This is further illustrated by the specific application example below.

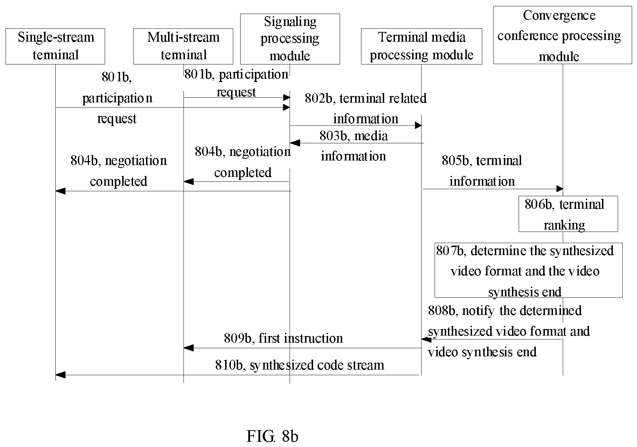

As shown in FIG. 8b, the video conference implementation method includes steps 801b to 810b.

At step 801b, a single-stream terminal and a multi-stream terminal respectively initiate a conference participation request.

At step 802b, a signaling processing module parses and processes conference participation control signaling, and judges whether the conference is configured to be a forced single-stream conference. If not, the conference mode is set to be a convergence conference mode, and information of the terminal is sent to a terminal media processing module. The information sent includes, but is not limited to, a terminal type, an audio port, an audio format, a video port, a video resolution, a video frame rate, a video code rate, a transmission port, a bandwidth, and the like.

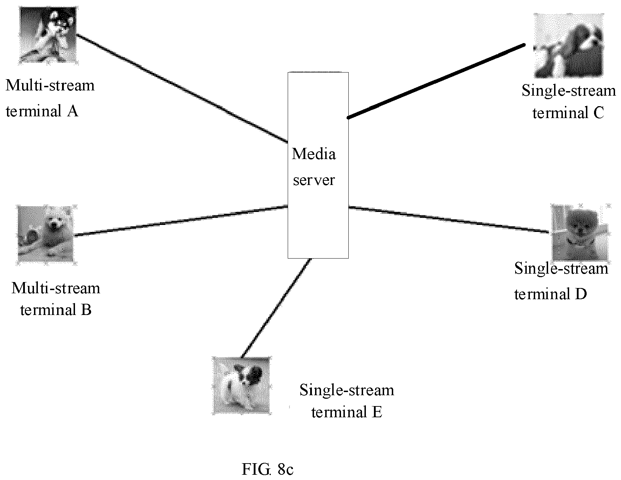

As shown in FIG. 8c, there are two multi-stream terminals (the multi-stream terminal A and multi-stream terminal B) and three single-stream terminals (single-stream terminal C, single-stream terminal D, and single-stream terminal E) participating in the conference. When each terminal participates in the conference, the information of the terminal is distributed to the terminal media processing module through an internal message.

At step 803b, the terminal media processing module records information of the single-stream terminal and the multi-stream terminal, and feeds back the negotiated media information to the signaling processing module.

At step 804b, the signaling processing module completes handshake negotiation with the terminals, and a conference participation connection for the terminals is established.

When all terminals are in the conference, a terminal information table is as shown in table 7 below (the below is merely an example and does not intend to be limitation. For example, information like a transmission port or a bandwidth may also be included).

Table 7 Terminal information table

| Terminal number | Terminal type | Audio/Video port | Video resolution, frame rate and code rate | .... |
|---|---|---|---|---|
| 1 | Multi-stre am | 20080, 20082 | 720P/15/1M | |
| 2 | Multi-stre am | 20090, 20092 | 720P/15/1M | |
| 3 | Single-str eam | 20100, 20102 | 720P/10/512K | |
| 4 | Single-str eam | 20104, 20106 | 480P/10/384K | |
| 5 | Single-str eam | 20108, 20110 | 480P/10/384K | |

At step 805b, the terminal media processing module sends the information of the terminals to a convergence conference processing module.

At step 806b, the convergence conference processing module obtains the terminal information from the terminal media processing module. Since the conference in this embodiment is in a convergence conference mode, capabilities of the single-stream and multi-stream terminals are ranked according to the media information negotiated by the terminals, respectively. Capability ranking of the multi-stream terminals is used for selection of the video synthesis end, and capability ranking of the single-stream terminal is used for format selection of the synthesized video.

A ranking table of the multi-stream terminals in this example is shown in table 8 below.

Table 8 Multi-stream terminal ranking table

| Ranking number | Video resolution, frame rate and code rate | Terminal number | .... |
|---|---|---|---|
| 1 | 720P/15/1M | 1,2 | |

A ranking table of the single-stream terminals in this example is shown in table 9 below.

Table 9 Single-stream terminal ranking table

| Ranking number | Video resolution, frame rate and code rate | Terminal number | .... |
|---|---|---|---|
| 1 | 720P/10/512K | 3 | |
| 2 | 480P/10/384K | 4, 5 | |

It should be noted that, in other embodiments, the ranking is not necessary.

At step 807b, the convergence conference processing module selects a synthesized video format according to a preset rule, and the video synthesis end is selected according to a preset strategy. Referring to a capability ranking of terminals, the video synthesis end and the synthesized video format are selected.

The preset strategy may include: selecting a multi-stream terminal with strong computing power as the video synthesis end. It should be noted that this is only an example, and the video synthesis end may be selected according to other strategies.

According to the above example, assuming that terminals A, B, C, D and E participate the conference in turn, then selection of the video synthesis end is triggered when terminal C participates in, and the convergence conference processing module, according to the preset rule and by checking the capability ranking of the multi-stream terminals, selects the multi-stream terminal A as a video synthesis end and selects the multi-stream terminal B as another video synthesis end. If a backup video synthesis end is needed, another different multi-stream terminal needs to be selected as a video synthesis end. If the multi-stream terminal A is selected as a video synthesis end of 512K code rate, and the multi-stream terminal B is selected as a video synthesis end of 384K code rate, the video synthesis end record table is as shown in table 10 below.

Table 10 Video synthesis end record table

| Synthesis number | Synthesized video format | Terminal number of video synthesis end | Distribution terminal number |
|---|---|---|---|
| 1 | 720P/10/512K | 1 (i.e., terminal A) | 3 (i.e., terminal C) |
| 2 | 480P/10/384K | 2 (i.e., terminal B) | 4 (i.e., terminal D), 5 (i.e., terminal E) |

At step 808b, the convergence conference processing module notify the terminal media processing module of the selected video synthesis end and synthesized video format.

At step 809b, the terminal media processing module sends a first instruction to the multi-stream terminal. The first instruction includes, but is not limited to: a synthesis port, a coding or decoding type of the synthesized video, a resolution of the synthesized video, a frame rate of the synthesized video, a code rate of the synthesized video, and so on.

At step 810b, the terminal media processing module acquires the synthesized code stream through a server port corresponding to the video synthesis end, and forwards the synthesized code stream to each single-stream terminal.

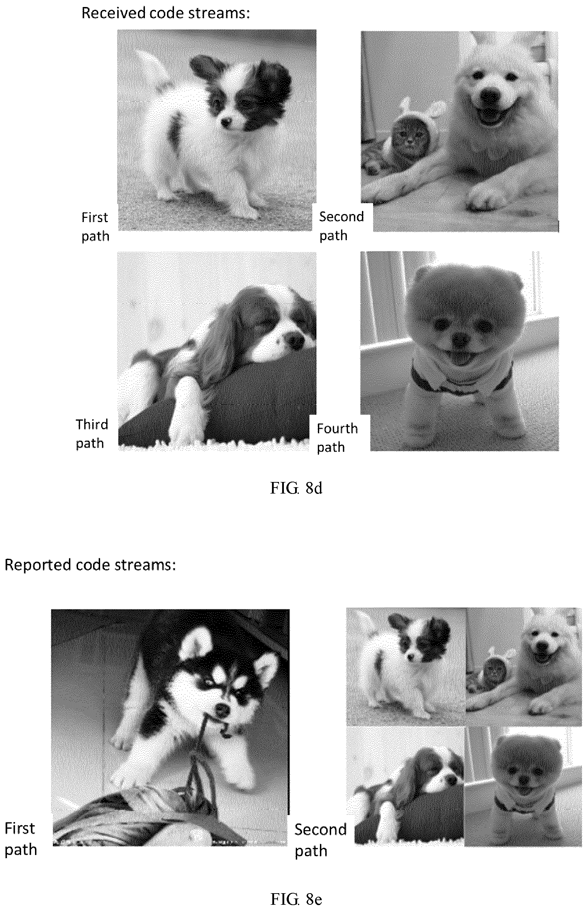

After the above operations, the final code stream situation of the multi-stream terminal A is as below: as shown in FIG. 8d, the multi-stream terminal A will receive four paths of downlink code streams. As shown in FIG. 8e, the multi-stream terminal A will send two paths of uplink code streams, one is its own code stream, and the other is the synthesized code stream. It should be noted that, in this embodiment, the synthesized code stream is synthesized from four paths of downlink code streams, and in other embodiments, the synthesized code stream may be synthesized from one or more of the four paths of downlink code streams and the code stream of the multi-stream terminal A itself.

Scenario IV Convergence video conference processing after a single-stream terminal exits the conference

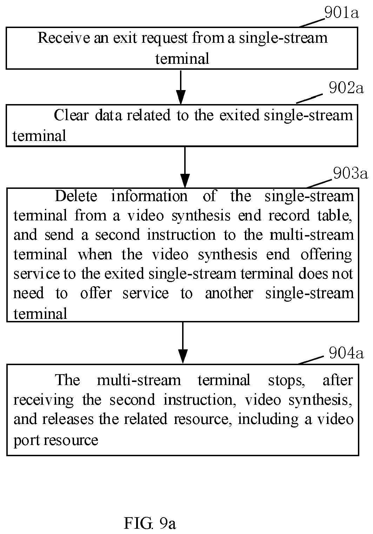

As shown in FIG. 9a, in Scenario IV, the video conference implementation method in the embodiment of the disclosure includes steps 901a to 904a.

At step 901a, an exit request is received from a single-stream terminal.

At step 902a, data related to the exited single-stream terminal is cleared.

At step 903a, information of the single-stream terminal is deleted from a video synthesis end record table, it is determined whether the video synthesis end (here, a multi-stream terminal) offering service to the exited single-stream terminal still needs to offer service to another single-stream terminal, and if not, information of the video synthesis end is deleted from the video synthesis end record table, a second instruction is sent to the multi-stream terminal, and a receiving port resource corresponding to the multi-stream terminal is released. The second instruction is configured to indicate that the multi-stream terminal no long serves as the video synthesis end.

At step 904a, the multi-stream terminal stops, after receiving the second instruction, video synthesis (stops synthesis of the synthesized code stream to be uploaded, without affecting the synthesis of the code stream to be displayed locally), and releases the related resource, including a video port resource.

Through the solution provided in this embodiment, related resources can be released timely after a single-stream terminal exits the conference, thereby improving the system performance and efficiency.

The single-stream terminal exiting the conference is described below through a specific application example.

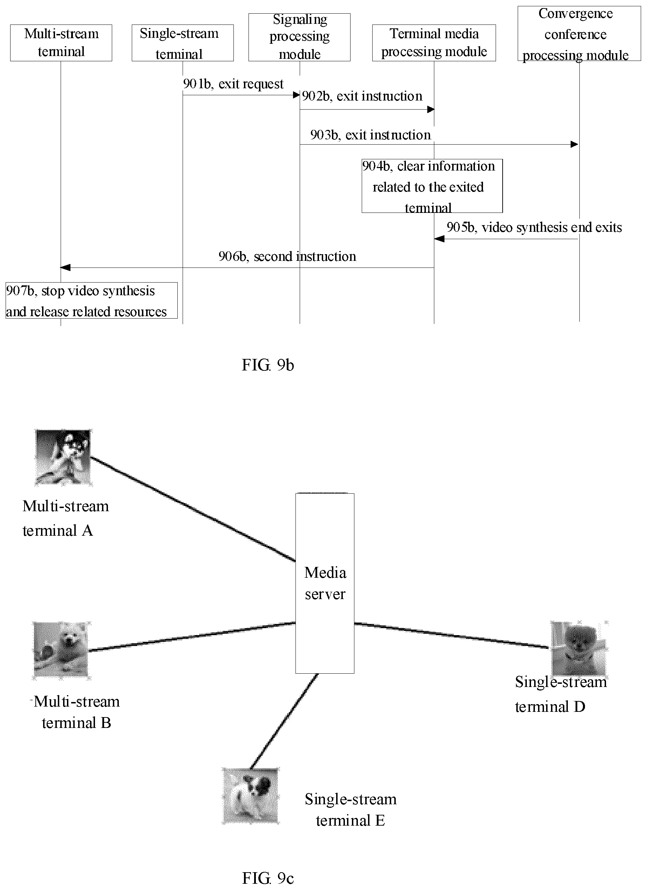

Based on the embodiment shown in FIG. 8b, the single-stream terminal C initiates an exit, and as shown in FIG. 9b, the video conference implementation method includes steps 901b to 907b.

At step 901b, the single-stream terminal C initiates an exit request to the signaling processing module.

At step 902b, the signaling processing module processes the exit request and notifies the terminal media processing module of the information of the exited single-stream terminal by an internal instruction, i.e., sends a single-stream terminal exit instruction to the terminal media processing module.

At step 903b, the signaling processing module notifies the convergence conference processing module of the information of the exited terminal by an internal instruction, i.e., sends to the convergence conference processing module a single-stream terminal exit instruction.

When the single-stream terminals to which the synthesized video from the multi-stream terminal is forwarded all exit the conference, the multi-stream terminal needs to be notified to release video synthesis resources, and thus the exit information of the single-stream terminal needs to be synchronously sent to the terminal media processing module and the convergence conference processing module.

In this embodiment, as shown in FIG. 9c, the single-stream terminal C exits the conference, and only multi-stream terminal A, multi-stream terminal B, single-stream terminal D and single-stream terminal E are left.

At step 904b, the terminal media processing module processes the single-stream terminal exit instruction, and clears data related to the exited single-stream terminal.

At step 905b, the convergence conference processing module receives the single-stream terminal exit instruction, deletes information of the single-stream terminal from a video synthesis end record table (i.e., table 10), and determines whether all distribution terminals of the video synthesis end corresponding to the single-stream terminal exit the conference. If so, the terminal media processing module is notified that the video synthesis end has exited, and step 906b is performed. If not all distribution terminals of the video synthesis end corresponding to the single-stream terminal exit the conference, the process is ended.

In this embodiment, after the single-stream terminal C (terminal number 3) exits the conference, all the distribution terminals of the video synthesis end 1 have exited, and thus all records of the synthesis number 1 should be deleted from the video synthesis end record table, and the terminal media processing module is notified that the video synthesis end with the synthesis number 1 has exited. The updated video synthesis end record table is as shown in table 11.

Table 11 Video synthesis end record table

| Synthesis number | Synthesized video format | Terminal number of video synthesis end | Distribution terminal number |
|---|---|---|---|
|  |  |  |  |
| 2 | 480P/10/384K | 2 | 4, 5 |

At step 906b, the terminal media processing module sends a second instruction to the multi-stream terminal to release a synthesized video receiving port resource at the server side. The second instruction is configured to indicate that the multi-stream terminal no long serves as the video synthesis end.

In this embodiment, it is indicated that the multi-stream terminal (i.e., multi-stream terminal A) corresponding to the terminal number 1 no longer serves as the video synthesis end. Here, the indication that the multi-stream terminal no longer serves as the video synthesis end may be done by setting the synthesis port to 0 through renegotiation.

The following example shows an instruction for renegotiation, in which it is noted that the synthesis port has been set to 0 (in this example, the "m=video 0 RTP/AVP 117" line).

A renegotiation example is as below.

```
v=0
o=ZTE-SOMTMS 4245362188 4245362189 IN IP4 192.168.1.118
s=session SDP
c=IN IP4 192.168.1.118
t=0 0
m=audio 20580 RTP/AVP 8
a=ptime:20
a=rtpmap:8 PCMA/8000/1
a=sendrecv
a=zimeclient
m=video 20594 RTP/AVP 118
b=AS:3584
a=rtpmap: 118 H264/90000
a=fmtp:118
profile-level-id=64001f;packetization-mode=1; MaxBR=35840
a=sendrecv
a=zimeclient
m=video 20620 RTP/AVP 117
b=AS:3584
a=rtpmap: 117 H264/90000
a=fmtp:117
profile-level-id=42e01f;packetization-mode=1; MaxBR=35840
a=recvonly
a=zimeclient
m=video 20646 RTP/AVP 117
b=AS:3584
a=rtpmap: 117 H264/90000
a=fmtp:117
profile-level-id=42e01f;packetization-mode=1; MaxBR=35840
```

```
a=recvonly
a=zimeclient
m=video 20672 RTP/AVP 117
b=AS:3584
a=rtpmap: 117 H264/90000
a=fmtp:117
profile-level-id=42e01f;packetization-mode=1; MaxBR=35840
a=recvonly
m=video 0 RTP/AVP 117
b=AS:3584
a=rtpmap: 117 H264/90000
a=fmtp: 117
profile-level-id=42e01f,packetization-mode=1; MaxBR=35840
a=sendonly
a=videoconfmixer
a=zimeclient
```

It should be noted that the above indication method is merely an example, and other methods may be adopted to indicate that the multi-stream terminal no longer serves as the video synthesis end.

At step 907b, the multi-stream terminal A receives the second instruction to stop video synthesis, and releases the related resource (including a video port resource).

Through the solution provided in this embodiment, after the terminal C exits, resources of the video synthesis end and of the server end (i.e., the server end of the video conference system) serving the terminal C can be released in time, thereby improving the system performance. It should be noted that, the multi-stream terminal serving the terminal C here is a multi-stream terminal participating in the video conference, however, in other embodiments, the multi-stream terminal may be an idle multi-stream terminal called in. In this case, the processing is similar and thus is not repeated.

Scenario V Adaptive dynamic switching of a convergence video conference

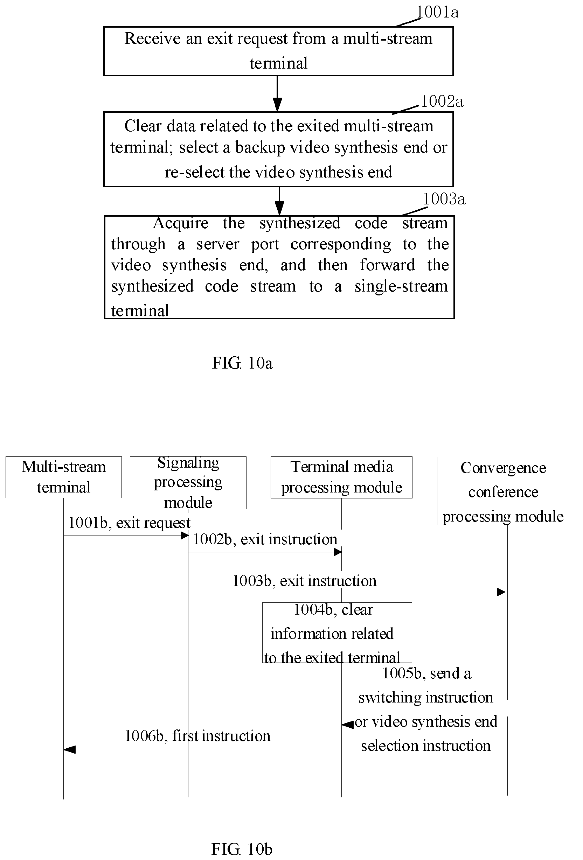

As shown in FIG. 10a, in Scenario V, the video conference implementation method in the embodiment of the disclosure includes steps 1001a to 1003a.

At step 1001a, an exit request initiated by a multi-stream terminal is received.

At step 1002a, data related to the exited multi-stream terminal is cleared. When the multi-stream terminal is the video synthesis end, it is inquired whether a backup video synthesis end exists. If so, the backup video synthesis end is selected as the new video synthesis end, and the single-stream terminal served by the exited multi-stream terminal is added to the distribution terminal list of the new video synthesis end. If not, the video synthesis end is re-selected, and when the selected video synthesis end is a multi-stream terminal, the first instruction is sent to the multi-stream terminal.

The new video synthesis end may be re-selected by: selecting from the multi-stream terminals participating in the video reference as the video synthesis end, or calling an idle multi-stream terminal as the video synthesis end, or using the media server as the video synthesis end.

At step 1003a, the synthesized code stream is acquired through a server port corresponding to the video synthesis end, and then forwarded to each single-stream terminal.

According to the solution provided in this embodiment, when a multi-stream terminal serving as the video synthesis end exits the conference, timely switching can be performed so that the video conference service is not stopped due to exit or exception of the multi-stream terminal (video synthesis end), and continuity of the system functions is ensured.

This is further illustrated below by a specific application example.

Based on the embodiment shown in FIG. 8b, a multi-stream terminal initiates an exit, and as shown in FIG. 10b, the video conference implementation method includes steps 1001b to 1006b.

At step 1001b, a multi-stream terminal initiates an exit request to the signaling processing module.

At step 1002b, the signaling processing module processes the exit request and notifies the terminal media processing module of the information of the exited terminal by an internal instruction, i.e., sends a multi-stream terminal exit instruction to the terminal media processing module.

At step 1003b, the signaling processing module notifies the convergence conference processing module of the information of the exited terminal by an internal instruction. i.e., sends to the convergence conference processing module a multi-stream terminal exit instruction.

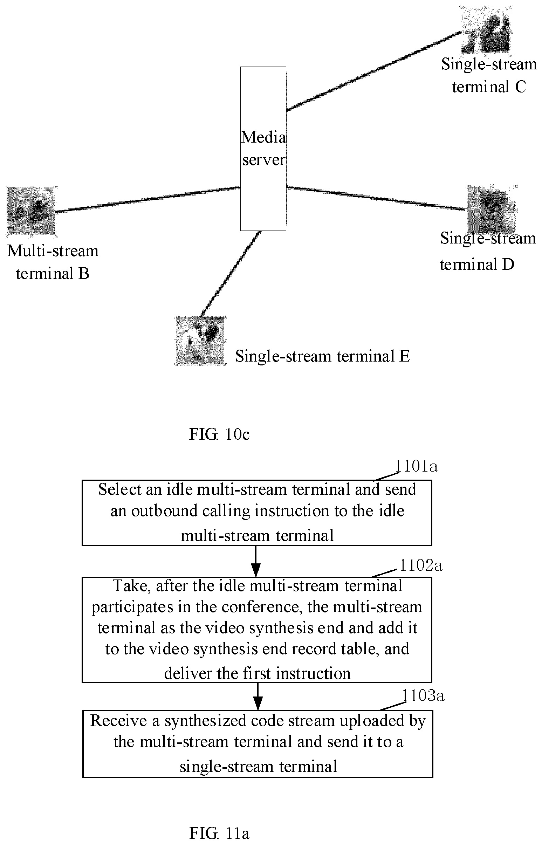

In this embodiment, after the multi-stream terminal A exits the conference, the networking graph is as shown in FIG. 10c.

At step 1004b, the terminal media processing module processes the multi-stream terminal exit instruction, and clears data related to the exited multi-stream terminal.

At step 1005b, the convergence conference processing module receives the multi-stream terminal exit instruction, and judges whether the conference is a forced single-stream conference. If it is a forced single-stream conference, no processing is performed since a media server is used as the video synthesis end; and if it is not a forced single-stream conference and the multi-stream terminal serves as the video synthesis end, the multi-stream terminal is deleted from a video synthesis end record table, and it is determined whether a backup video synthesis end exists. If so, the backup video synthesis end is used as a new video synthesis end, and a switching instruction is sent to the terminal media processing module to indicate that the back video synthesis end is used to replace the exited multi-stream terminal. If not, a new video synthesis end satisfying the requirements is selected from the multi-stream terminals participating in the video conference and notified to the terminal media processing module, and information of the new video synthesis end is filled into the video synthesis end record table. If no new video synthesis end is available, an idle multi-stream terminal is called as the new video synthesis end for the single-stream terminal, and a video synthesis end selection instruction is sent to the terminal media processing module.

In this embodiment, after the multi-stream terminal A exits the conference, records of the synthesis number 1 are all deleted from the video synthesis end record table. The video synthesis end with synthesis number 2 is selected as the video synthesis end for the single-stream terminal 3, and the single-stream terminal 3 is added to the distribution terminal number entry of the synthesis number 2. The updated video synthesis end record table is as shown in table 12.

Table 12 Video synthesis end record table

| Synthesis number | Synthesized video format | Terminal number of video synthesis end | | Distribution terminal number |
|---|---|---|---|---|
| | | | | |
| 2 | 480P/10/384K | 2 | 4, 5, 3 | |

At step 1006b, the terminal media processing module, when receiving the switching instruction, performs forwarding processing of the synthesized code stream according to the new distribution terminal number list, and when receiving the video synthesis end selection instruction, sends a first instruction to the multi-stream terminal. The first instruction includes, but is not limited to: a synthesis port, a coding or decoding type of the synthesized video, a resolution of the synthesized video, a frame rate of the synthesized video, a code rate of the synthesized video, and so on.

Subsequently, the terminal media processing module acquires the synthesized code stream through a server port corresponding to the video synthesis end, and forwards the synthesized code stream to each single-stream terminal.

Scenario VI Outbound calling of an idle multi-stream terminal in a convergence video conference

As shown in FIG. 11a, in Scenario VI, the video conference implementation method in the embodiment of the disclosure includes steps 1101a to 1103a.

At step 1101a, in selection of the video synthesis end, if an idle multi-stream terminal table is configured, an outbound calling instruction is sent to an idle multi-stream terminal selected from an idle multi-stream terminal table.

It should be noted that the outbound calling instruction is sent to an idle multi-stream terminal that satisfies the requirement of code stream synthesis and in a normal state.

At step 1102a, after the idle multi-stream terminal participates in the conference, the multi-stream terminal is used as the video synthesis end and added into the video synthesis end record table, and the first instruction is delivered to the multi-stream terminal. The first instruction carries video synthesis end indication information and video synthesis information.

At step 1103a, a synthesized code stream uploaded by the multi-stream terminal is received and sent to a single-stream terminal.

The following is description by way of a specific example.

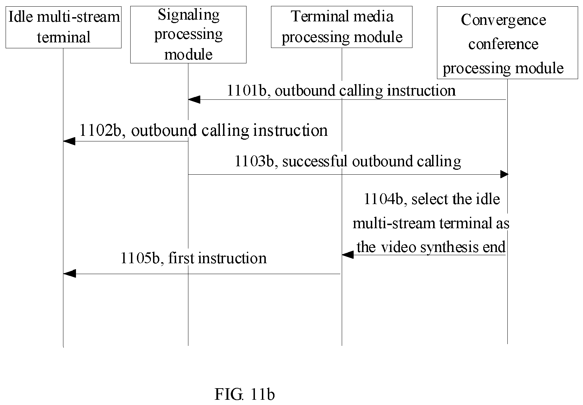

As shown in FIG. 11b, the video conference implementation method includes steps 1101b to 1105b.

At step 1101b, in selection of the video synthesis end, if an idle multi-stream terminal table is configured, the convergence conference processing module preferably selects an idle multi-stream terminal that satisfies the requirement of code stream synthesis and in a normal state from the idle multi-stream terminal table, initiates an outbound calling instruction to the signaling processing module, and updates a status of the idle multi-stream terminal in the idle multi-stream terminal table to be engaged. The status may include idle, engaged and offline.

In this example, the idle multi-stream terminal table is shown in table 13 below, and the selected idle multi-stream terminal is a multi-stream terminal with number 2.

Table 13 Idle multi-stream terminal table

| Terminal number | Terminal type | Video resolution, frame rate and code rate | Idle multi-stream terminal IP | Idle multi-stream terminal port | Idle multi-stream terminal name | Status |
|---|---|---|---|---|---|---|
| 1 | Multi-stream | 1080P/15/2M | 192.168.1.176 | 5060 | MT176 | Idle |
| 2 | Multi-stream | 720P/15/1M | 192.168.1.177 | 5060 | MT177 | Engaged |

At step 1102b, the signaling processing module, according to information of the outbound terminal selected from the idle multi-stream terminal table, initiates an outbound call to call the idle multi-stream terminal to participate in the conference. Since the outbound idle terminal does not need to participate in the video conference, the audio code stream and video code stream of the outbound idle terminal do not need to be sent to the server. As a result, the media negotiation signaling carried by the outbound call does not contain uplink audio code stream information or uplink video code stream information.

At step 1103b, after the outbound call is successful, the signaling processing module notifies the convergence conference processing module via an internal instruction.

At step 1104b, the convergence conference processing module updates the video synthesis end record table, and notifies the terminal media processing module that the called idle multi-stream terminal is selected as the video synthesis end.

At step 1105b, the terminal media processing module sends a first instruction to the multi-stream terminal, indicating that the multi-stream terminal is selected as the video synthesis end.

Subsequently, the terminal media processing module acquires the synthesized code stream through a server port corresponding to the video synthesis end, and forwards the synthesized code stream to the single-stream terminal.

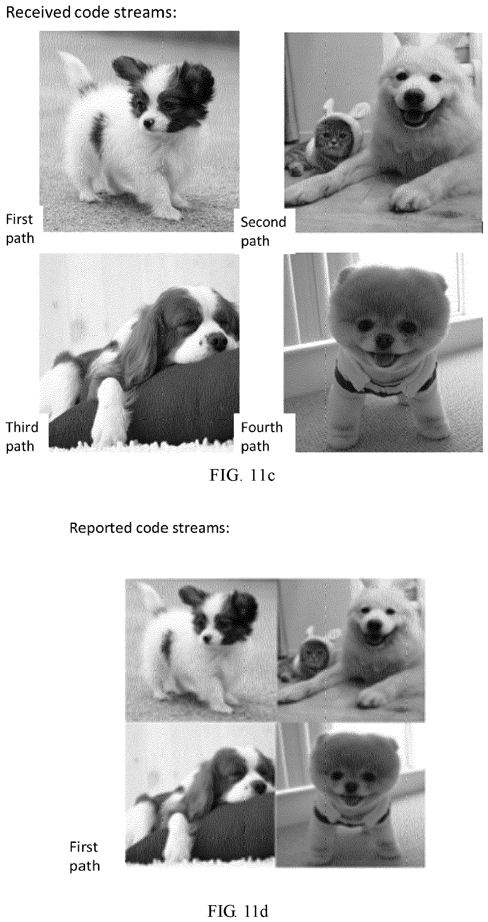

After the above operations, the final code stream situation of the idle multi-stream terminal is as below: as shown in FIG. 11c, the idle multi-stream terminal will receive four paths of code streams. As shown in FIG. 11d, the idle multi-stream terminal will uplink one path of code stream, which is a synthesized code stream.

According to the solution provided in this embodiment, an idle multi-stream terminal is called to serve as the video synthesis end, which expanded the processing capacity of the whole video conference system, so that more terminals can access the video conference system.

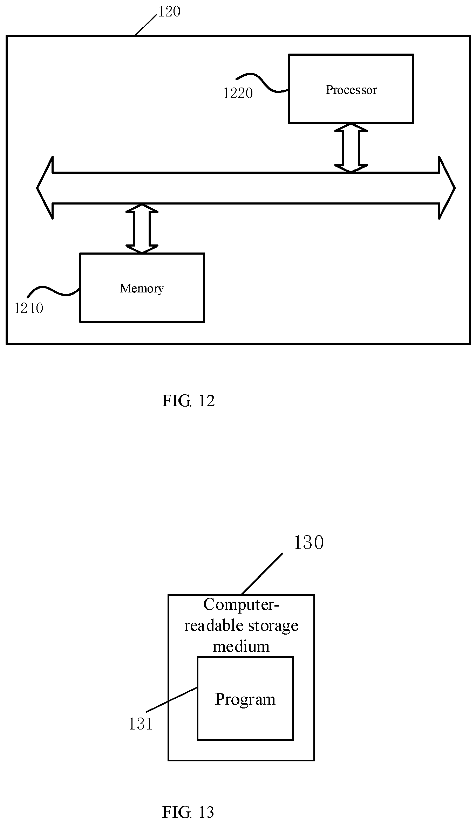

As shown in FIG. 12, in an embodiment of the present disclosure, there is provided a video conference implementation apparatus 120, including a memory 1210 and a processor 1220. The memory 1210 stores a program thereon which, when read and executed by the processor 1220, causes the video conference implementation method according any of the above embodiments to be implemented.

As shown in FIG. 13, in an embodiment of the present disclosure, there is provided a computer-readable storage medium 130 having one or more programs 131 stored thereon, which are executable by one or more processors to cause the video conference implementation method according any of the above embodiments to be implemented.

Those of ordinary skill in the art will appreciate that all or some steps of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or step may be performed cooperatively by several physical components. Some or all components may be implemented as software executed by a processor, such as a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. A computer storage medium includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those skilled in the art that communication medium typically includes a computer-readable instruction, a data structure, a program module, or other data in a modulated data signal, such as a carrier wave or other transport mechanism, and may include any information delivery medium.

**Claims**

1. A video conference implementation method, comprising:
determining a type of a terminal participating in a video conference, determining, in response to that the terminal participating in the video conference comprises a single-stream terminal, a video synthesis end, and sending a synthesized code stream generated by the video synthesis end to the single-stream terminal, wherein the synthesized code stream is synthesized from an original code stream of the terminal participating in the video conference.

2. The video conference implementation method according to claim 1, further comprising: sending, in response to that the terminal participating in the video conference comprises a multi-stream terminal, an original code stream generated by another terminal participating in the video conference to the multi-stream terminal.

3. The video conference implementation method according to claim 1, wherein the determining the type of the terminal participating in the video conference comprises:
determining the type of the terminal participating in the video conference according to terminal information reported by the terminal.

4. The video conference implementation method according to claim 1, wherein the video synthesis end comprises a media server and/or a multi-stream terminal.

5. The video conference implementation method according to claim 1, wherein the determining the video synthesis end comprises:
selecting one or more multi-stream terminals from a plurality of multi-stream terminals participating in the video conference as the video synthesis end.

6. The video conference implementation method according to claim 5, wherein the selecting one or more multi-stream terminals from a plurality of multi-stream terminals participating in the video conference as the video synthesis end comprises: selecting one or more multi-stream terminals from the plurality of multi-stream terminals participating in the video conference as the video synthesis end according to a preset strategy.

7. The video conference implementation method according to claim 1, wherein the determining the video synthesis end comprises:
calling an idle multi-stream terminal to participate in the conference, and taking, after the called multi-stream terminal participates in the conference, the called multi-stream terminal as the video synthesis end.

8. The video conference implementation method according to claim 1, wherein after determining the video synthesis end, the method further comprises: sending, in response to that the video synthesis end is a multi-stream terminal, to the multi-stream terminal indication information indicating that the multi-stream terminal is selected as the video synthesis end.

9. The video conference implementation method according to claim 1, wherein after determining the type of the terminal participating in the video conference, the method further comprises: determining synthesized video format information according to a preset rule, wherein the synthesized video format information is used by the video synthesis end to generate the synthesized code stream.

10. The video conference implementation method according to claim 9, wherein after determining the video synthesis end, the method further comprises: sending a first instruction carrying the synthesized video format information to the video synthesis end.

11. The video conference implementation method according to claim 9, wherein the synthesized video format information comprises at least one of: a transmission port for the synthesized video, a coding or decoding type of the synthesized video, a bandwidth, a transceiving mode, a resolution of the synthesized video, a code rate of the synthesized video and a frame rate of the synthesized video.

12. The video conference implementation method according to claim 8, further comprising: recording, in response to that the video synthesis end is a multi-stream terminal, single-stream terminals served by the video synthesis end; and sending, in response to that all single-stream terminals served by the multi-stream terminal as the video synthesis end exit the conference, to the multi-stream terminal a second instruction indicating that the multi-stream terminal no longer serves as the video synthesis end.

13. The video conference implementation method according to claim 1, further comprising: re-determining the video synthesis end when the multi-stream terminal serving as the video synthesis end exits the conference or has an exception.

14. The video conference implementation method according to claim 13, wherein the re-determining the video synthesis end comprises: taking a backup video synthesis end as a new video synthesis end, or selecting the video synthesis end from the multi-stream terminals which participate in the video conference but are not selected as the video synthesis end, or calling an idle multi-stream terminal as the video synthesis end.

15. The video conference implementation method according to any one of claims 1 to 14, wherein the determining the video synthesis end comprises: taking, in response to that the configured conference is in a preset mode, a media server as the video synthesis end;
the method further comprises: sending, in response to that the terminal participating in the video conference comprises a multi-stream terminal, a synthesized code stream generated by the media server to the multi-stream terminal.

16. A video conference implementation method, comprising:
receiving an original code stream sent from a media server, generating a synthesized code stream from the original code stream, and uploading the synthesized code stream to the media server so that the media server sends the synthesized code stream to a single-stream terminal.

17. The video conference implementation method according to claim 16, wherein before receiving the original code stream, the method further comprises: receiving a conference participation request and participating in the video conference.

18. The video conference implementation method according to claim 16, wherein the generating the synthesized code stream from the original code stream comprises:
generating, after receiving a first instruction indicating that a current device is selected as a video synthesis end, the synthesized code stream from the original code stream.

19. The video conference implementation method according to claim 18, wherein the first instruction carries synthesized video format information; and
the generating the synthesized code stream comprises: generating the synthesized code stream according to the synthesized video format information in the first instruction.

20. The video conference implementation method according to claim 19, wherein the synthesized video format information comprises at least one of: a transmission port for the synthesized video, a coding or decoding type of the synthesized video, a bandwidth, a transceiving mode, a resolution of the synthesized video, a code rate of the synthesized video and a frame rate of the synthesized video.

21. The video conference implementation method according to claim 16, further comprising: stopping generation of the synthesized code stream upon receiving a second instruction indicating that a current device no longer serves as a video synthesis end, and releasing related resources.

22. The video conference implementation method according to any one of claims 16 to 21, wherein the synthesized code stream is a single-path or multi-path synthesized code stream, and the single-path synthesized code stream comprises one or more video formats of code streams.

23. A video conference implementation apparatus, comprising a memory and a processor, wherein the memory stores a program thereon which, when read and executed by the processor, causes the video conference implementation method according to any one of claims 1 to 22 to be implemented.

24. A computer-readable storage medium, wherein the computer-readable storage medium has one or more programs stored thereon, and the one or more programs are executable by one or more processors to cause the video conference implementation method according to any one of claims 1 to 22 to be implemented.

25. A video conference implementation system, comprising:

a signaling processing module configured to process conference participation and exit of a terminal, and send information of a terminal participating in a conference to a media processing assembly; and

the media processing assembly configured to determine a type of the terminal participating in the video conference according to the information of the terminal, determine, in response to that the terminal participating in the video conference comprises a single-stream terminal, a video synthesis end, and send a synthesized code stream generated by the video synthesis end to the single-stream terminal, wherein the synthesized code stream is synthesized from an original code stream of the terminal participating in the video conference.

26. The video conference implementation system according to claim 25, wherein the media processing assembly comprises a terminal media processing module and a convergence conference processing module, wherein :

the terminal media processing module is configured to receive the information of the terminal participating in the conference sent from the signaling processing module, send the information of the terminal to the convergence conference processing module, and receive an original code stream, receive information of the video synthesis end sent from the convergence conference processing module, and send, based on the information of the video synthesis end, the synthesized code stream generated by the video synthesis end to the single-stream terminal; and

the convergence conference processing module is configured to determine the type of the terminal participating in the video conference according to the information of the terminal, determine, in response to that the terminal participating in the video conference comprises a single-stream terminal, the video synthesis end, and notify the terminal media processing module of the information of the video synthesis end.

27. The video conference implementation system according to claim 26, wherein the convergence conference processing module determining the video synthesis end comprises: taking a media server and/or a multi-stream terminal as the video synthesis end.

28. The video conference implementation system according to claim 26, wherein the convergence conference processing module determining the video synthesis end comprises: selecting one or more multi-stream terminals from a plurality of multi-stream terminals participating in the video conference as the video synthesis end.

29. The video conference implementation system according to claim 26, wherein the convergence conference processing module determining the video synthesis end comprises: calling an idle multi-stream terminal to participate in the conference, and taking, after the called multi-stream terminal participates in the conference, the called multi-stream terminal as the video synthesis end.

30. The video conference implementation system according to claim 26, wherein the convergence conference processing module is further configured to, after determining the video synthesis end, send, in response to that the video synthesis end is a multi-stream terminal, to the terminal media processing module indication information indicating that the multi-stream terminal is selected as the video synthesis end; and

the terminal media processing module is further configured to send to the corresponding multi-stream terminal the indication information indicating that the multi-stream terminal is selected as the video synthesis end.

31. The video conference implementation system according to claim 26, wherein the convergence conference processing module is further configured to, record, after a multi-stream terminal is determined to be the video synthesis end, single-stream terminals served by the video synthesis end; and send, in response to that all single-stream terminals served by the multi-stream terminal as the video synthesis end exit the conference, to the terminal media processing module a second instruction indicating that the multi-stream terminal no longer serves as the video synthesis end; and

the terminal media processing module is further configured to send to the multi-stream terminal a second instruction indicating that the multi-stream terminal no longer serves as the video synthesis end.

32. The video conference implementation system according to any one of claims 25 to 31, wherein the convergence conference processing module is further configured to, re-determine the video synthesis end in response to that the multi-stream terminal serving as the video synthesis end exits the conference or has an exception.

Terminal
101

Signaling access
and bearer
network 102

Video conference
system 103

Signaling
access

AS

Media
bearer

MRF

FIG. 1

201

Determine a type of a terminal participating in
a video conference

202

Determine, when the terminal participating in
the video conference includes a single-stream
terminal, a video synthesis end, and send a
synthesized code stream generated by the video
synthesis end to the single-stream terminal

FIG. 2

FIG. 3a

FIG. 3b

A multi-stream terminal receives an original code stream sent from the media server, and generates a synthesized code stream from the original code stream ⟋401

The multi-stream terminal uploads the synthesized code stream to the media server so that the media server sends the synthesized code stream to a single-stream terminal ⟋402

FIG. 4

FIG. 5

601a

Receive a conference participation request
from a single-stream terminal

602a

Record information of the single-stream
terminal, and negotiate with the single-stream
terminal to establish a conference participation
connection

603a

Determine synthesized video format
information according to the information of the
single-stream terminal and a preset principle,
and select a video synthesis end

604a

Apply for a video synthesis resource, use
the video synthesis resource for synthesizing
code streams according to the synthesized
video format information, to obtain a
synthesized code stream, and send the
synthesized code stream to the single-stream
terminal

FIG. 6a

| Single-stream terminal | Signaling processing module | Terminal media processing module | Convergence conference processing module |
|---|---|---|---|

601b, participation
request

602b, terminal
information

603b, media
information

604b, media
information

605b, terminal
information

606b, terminal
ranking

607b, internal synthesis
resource number

608b, synthesized
code stream

FIG. 6b

Single-stream
terminal C

Media
server

Single-stream
terminal E

Single-stream
terminal D

FIG. 6c

701a

Receive conference participation requests from a
single-stream terminal and a multi-stream terminal

702a

Record information of the single-stream
terminal and the multi-stream terminal, and
negotiate with the single-stream terminal to
establish a conference participation connection

703a

Determine synthesized video format
information according to the information of the
terminals and a preset rule, and select a media
server as the video synthesis end

704a

Apply for a video synthesis resource,
synthesize code streams to obtain a synthesized
code stream, and send the synthesized code stream
to the single-stream terminal and the multi-stream
terminal

FIG. 7a

| Single-stream/ Multi-stream terminal | Signaling processing module | Terminal media processing module | Convergence conference processing module |
|---|---|---|---|

701b, participation request

702b, terminal information

703b, media information

704b, media information

705b, terminal information

706b, terminal ranking

707b, select synthesized video format

709b, synthesized code stream

708b, internal synthesis resource number

FIG. 7b

Multi-stream terminal A

Single-stream terminal C

Media server

Multi-stream terminal B

Single-stream terminal D

Single-stream terminal E

Uplink video code stream

Downlink video code stream

FIG. 7c

Receive a conference participation request _801a

Record information of the terminal, and negotiate with the terminal to establish a conference participation connection for the terminal _802a

Determine that the terminal type includes a single-stream terminal, and if the conference is not configured to be a forced single-stream conference, select a synthesized video format and a video synthesis end _803a

Send, when the video synthesis end is a multi-stream terminal, a first instruction carrying video synthesis end indication information and synthesized video format information to the selected video synthesis end _804a

Receive the synthesized code stream sent from the multi-stream terminal and forward it to the single-stream terminal _805a

FIG. 8a

FIG. 8b

Multi-stream
terminal A

Single-stream
terminal C

Media
server

Multi-stream
terminal B

Single-stream
terminal D

Single-stream
terminal E

FIG. 8c

Received code streams:

First
path

Second
path

Third
path

Fourth
path

FIG. 8d

Reported code streams:

First
path

Second
path

FIG. 8e

901a

| Receive an exit request from a single-stream terminal |

902a

| Clear data related to the exited single-stream terminal |

903a

| Delete information of the single-stream terminal from a video synthesis end record table, and send a second instruction to the multi-stream terminal when the video synthesis end offering service to the exited single-stream terminal does not need to offer service to another single-stream terminal |

904a

| The multi-stream terminal stops, after receiving the second instruction, video synthesis, and releases the related resource, including a video port resource |

FIG. 9a

Multi-stream terminal | Single-stream terminal | Signaling processing module | Terminal media processing module | Convergence conference processing module

901b, exit request

902b, exit instruction

903b, exit instruction

904b, clear information related to the exited terminal

905b, video synthesis end exits

906b, second instruction

907b, stop video synthesis and release related resources

FIG. 9b

Multi-stream terminal A

Media server

Multi-stream terminal B

Single-stream terminal D

Single-stream terminal E

FIG. 9c

1001a

Receive an exit request from a multi-stream terminal

1002a

Clear data related to the exited multi-stream terminal; select a backup video synthesis end or re-select the video synthesis end

1003a

Acquire the synthesized code stream through a server port corresponding to the video synthesis end, and then forward the synthesized code stream to a single-stream terminal

FIG. 10a

| Multi-stream terminal | Signaling processing module | Terminal media processing module | Convergence conference processing module |

1001b, exit request

1002b, exit instruction

1003b, exit instruction

1004b, clear information related to the exited terminal

1005b, send a switching instruction or video synthesis end selection instruction

1006b, first instruction

FIG. 10b

Single-stream
terminal C

Media
server

Multi-stream
terminal B

Single-stream
terminal D

Single-stream terminal E

FIG. 10c

Select an idle multi-stream terminal and send
an outbound calling instruction to the idle
multi-stream terminal ⟋1101a

Take, after the idle multi-stream terminal
participates in the conference, the multi-stream
terminal as the video synthesis end and add it
to the video synthesis end record table, and
deliver the first instruction ⟋1102a

Receive a synthesized code stream uploaded by
the multi-stream terminal and send it to a
single-stream terminal ⟋1103a

FIG. 11a

| Idle multi-stream terminal | Signaling processing module | Terminal media processing module | Convergence conference processing module |
|---|---|---|---|

1101b, outbound calling instruction

1102b, outbound calling instruction

1103b, successful outbound calling

1104b, select the idle multi-stream terminal as the video synthesis end

1105b, first instruction

FIG. 11b

Received code streams:

First path

Second path

Third path

Fourth path

FIG. 11c

Reported code streams:

First path

FIG. 11d

EP 3 905 668 A1

FIG. 12

FIG. 13

## INTERNATIONAL SEARCH REPORT

| International application No. |
| --- |
| **PCT/CN2019/120230** |

| | |
| --- | --- |
| **A.    CLASSIFICATION OF SUBJECT MATTER** | |
| H04N 7/15(2006.01)i;  H04N 21/44(2011.01)i;  H04N 21/2743(2011.01)i | |
| According to International Patent Classification (IPC) or to both national classification and IPC | |

| | |
| --- | --- |
| **B.    FIELDS SEARCHED** | |
| Minimum documentation searched (classification system followed by classification symbols) | |
| H04N | |
| Documentation searched other than minimum documentation to the extent that such documents are included in the fields searched | |
| Electronic data base consulted during the international search (name of data base and, where practicable, search terms used) | |
| CNPAT, WPI, EPODOC, CNKI: 视频, 会议, 单流, 合成, 码流, video, conference, single-stream, synthesize, synthetic, code, stream | |

| | |
| --- | --- |
| **C.    DOCUMENTS CONSIDERED TO BE RELEVANT** | |

| Category* | Citation of document, with indication, where appropriate, of the relevant passages | Relevant to claim No. |
| --- | --- | --- |
| PX | CN 109660751 A (ZTE CORPORATION) 19 April 2019 (2019-04-19) description, paragraphs [0052]-[0397] | 1-32 |
| X | CN 105141884 A (SUZHOU KEDA TECHNOLOGY CO., LTD.) 09 December 2015 (2015-12-09) description, paragraphs [0064]-[0132], and figures 1-6 | 1-32 |
| A | CN 108134918 A (SUZHOU KEDA TECHNOLOGY CO., LTD.) 08 June 2018 (2018-06-08) entire document | 1-32 |
| A | EP 2334068 A1 (HUAWEI DEVICE CO., LTD.) 15 June 2011 (2011-06-15) entire document | 1-32 |

☐ Further documents are listed in the continuation of Box C.    ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 February 2020** | **21 February 2020** |

| Name and mailing address of the ISA/CN | Authorized officer |
| --- | --- |
| **China National Intellectual Property Administration No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/120230**

| Patent document cited in search report | | | Publication date (day/month/year) | Patent family member(s) | | | Publication date (day/month/year) |
|---|---|---|---|---|---|---|---|
| CN | 109660751 | A | 19 April 2019 | None | | | |
| CN | 105141884 | A | 09 December 2015 | None | | | |
| CN | 108134918 | A | 08 June 2018 | None | | | |
| EP | 2334068 | A1 | 15 June 2011 | US | 2011261151 | A1 | 27 October 2011 |
| | | | | CN | 101370114 | A | 18 February 2009 |
| | | | | WO | 2010034254 | A1 | 01 April 2010 |

Form PCT/ISA/210 (patent family annex) (January 2015)